# EUROPEAN PATENT APPLICATION

(11) **EP 4 730 871 A1**
(43) Date of publication of application: **22.04.2026**
(21) Application number: 24844405.1
(22) Date of filing: 06.06.2024
(51) Int. Cl.: H04W 48/18

(54) **COMMUNICATION METHOD AND COMMUNICATION APPARATUS**

(30) Priority: 27.07.2023 CN 202310934364
(71) Applicant: Huawei Technologies Co., Ltd., Shenzhen, Guangdong 518129 (CN)
(72) Inventor: FENG, Zhao, Shenzhen, Guangdong 518129 (CN); ZHANG, Zhiqin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Epping - Hermann - Fischer
(86) International application number: PCT/CN2024/097875
(87) International publication number: WO 2025/020710

(57) **Abstract**

This application provides a communication method and a communication apparatus. In the communication method, when a first operator and a second operator share an access network device, but the access network device needs to interact with a core network device of the second operator through a core network device of the first operator, at least one PLMN identifier that the access network device supports for access of a terminal device includes a first PLMN identifier, so that the access network device can broadcast the first PLMN identifier; and at least one public land mobile network identifier that a first AMF of the first operator supports for access of a terminal device also includes the first PLMN identifier. In this way, a terminal device of the second operator accesses a network.

## Description

This application claims priority to Chinese Patent Application No. 202310934364.6, filed with the China National Intellectual Property Administration on July 27, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

When constructing a network independently, an operator faces challenges such as high network deployment costs and completing high network coverage in a short period of time. Therefore, a network sharing technology is introduced. Sharing an access network is a sharing manner. When an access network is shared, it should be ensured that terminal devices of all operators that share an access network device can access respective core networks.

However, a person skilled in the art finds that when a plurality of operators need to share an access network device, if a core network device of one of the plurality of operators can interact with the shared access network device only through a core network device of another operator, there is a problem that a terminal device of the operator cannot access a network. That a core network device of one of the plurality of operators can interact with the shared access network device only through a core network device of another operator is also referred to as that there is no direct connection between the core network device of the operator and the shared access network device, or the core network device of the operator cannot directly interact with the access network device.

Therefore, how to enable a terminal device of an operator to access a network when a core network device of the operator cannot directly interact with the shared access network device is a technical problem that needs to be resolved.

### SUMMARY

This application provides a communication method and a communication apparatus, to enable a terminal device of an operator to access a network when a core network device of the operator cannot directly interact with a shared access network device.

According to a first aspect, this application provides a communication method, applied to an access network device. The access network device is a shared access network device of a first operator and a second operator, the access network device needs to interact with a core network device of the second operator through a core network device of the first operator, and the method includes: broadcasting first information within a coverage area of the access network device, where the first information indicates at least one public land mobile network identifier that the access network device supports for access of a terminal device; and the at least one public land mobile network identifier that the access network device supports for access of a terminal device includes a first public land mobile network identifier used for access of a terminal device of the second operator, and at least one public land mobile network identifier that a first access and mobility management function of the first operator supports for access of a terminal device includes the first public land mobile network identifier.

In this embodiment, the access network device needs to interact with the core network device of the second operator through the core network device of the first operator. In other words, the access network device can interact with the core network device of the second operator through the core network device of the first operator. In other words, the access network device can directly interact with the core network device of the first operator, the core network device of the first operator can directly interact with the core network device of the second operator, and the access network device cannot directly interact with the core network device of the second operator.

In this embodiment, when the access network device can directly interact with the core network device of the first operator but cannot directly interact with the core network device of the second operator, it may also be considered that there is a direct connection relationship between the access network device and the core network device of the first operator, and there is no direct connection relationship between the access network device and the core network device of the second operator. Generally, the access network device broadcasts, within a coverage area, at least one public land mobile network (public land mobile network, PLMN) identifier that the access network device supports for access of a terminal device, and the at least one PLMN identifier broadcast by the access network device is a PLMN identifier of an operator whose core network device directly interacts with the access network device. It should be understood that, in this case, for a terminal device of the second operator, because the core network device of the second operator cannot directly interact with the access network device, the at least one PLMN identifier broadcast by the access network device does not include a PLMN identifier of the second operator, and the access network device cannot find an access and mobility management function that supports for access of the terminal device of the second operator. Consequently, the terminal device of the second operator cannot access a network.

In view of this, in the communication method provided in this application, when the access network device broadcasts the first information to indicate the at least one broadcast PLMN identifier, the at least one PLMN identifier further includes the first PLMN identifier, and the at least one public land mobile network identifier that the first access and mobility management function of the first operator supports for access of a terminal device also includes the first PLMN identifier, where the first PLMN identifier is used for access of the terminal device of the second operator.

It may be understood that, according to the communication method provided in this application, because the first PLMN identifier is used for access of the terminal device of the second operator, when the terminal device of the second operator is located in the coverage area of the access network device, the terminal device of the second operator may perform access by selecting the first PLMN identifier, and then include second information in a registration request message used to request to access a network, where the second information indicates that the terminal device of the second operator selects the first PLMN identifier. Correspondingly, the access network device determines, based on the first PLMN identifier selected by the terminal device of the second operator and the at least one public land mobile network identifier that the first access and mobility management function of the first operator supports for access of a terminal device including the first PLMN identifier, the first access and mobility management function of the first operator as an access and mobility management function that supports for access of the terminal device of the second operator, so that the second operator accesses the network.

It should be noted that the first access and mobility management function of the first operator that can directly interact with the access network device indicates, to the access network device, the at least one PLMN identifier that the first access and mobility management function supports for access of a terminal device. Therefore, the access network device can learn of the at least one PLMN identifier that the first access and mobility management function supports for access of a terminal device. For example, the first access and mobility management function sends third information to the access network device, where the third information indicates the at least one PLMN identifier that the first access and mobility management function supports for access of a terminal device. However, it should be understood that this application differs from the conventional technology in that the third information indicates that the at least one PLMN identifier that the first access and mobility management function supports for access of a terminal device further includes the first PLMN identifier in addition to including a PLMN identifier of the first operator, where the first PLMN identifier is used for access of the terminal device of the second operator.

With reference to the first aspect, in a possible implementation, the first public land mobile network identifier is a public land mobile network identifier of the second operator.

In other words, in this implementation, the at least one PLMN identifier broadcast by the access network device includes the public land mobile network identifier of the second operator, and the at least one PLMN identifier that the first access and mobility management function supports for access of a terminal device also includes the public land mobile network identifier of the second operator.

It should be understood that, in this implementation, because the first PLMN identifier is the public land mobile network identifier of the second operator, when the terminal device of the second operator is located in the coverage area of the access network device, the terminal device of the second operator preferentially selects, based on a PLMN identifier selection priority, the first PLMN identifier for access.

With reference to the first aspect, in a possible implementation, the first public land mobile network identifier is a public land mobile network identifier that is allocated by the first operator and that is used for access of the terminal device of the second operator.

In other words, in this implementation, the at least one PLMN identifier broadcast by the access network device includes the PLMN identifier that is allocated by the first operator and that is used for access of the terminal device of the second operator, and the at least one PLMN identifier that the first access and mobility management function of the first operator supports for access of a terminal device also includes the PLMN identifier that is allocated by the first operator and that is used for access of the terminal device of the second operator.

It should be understood that, in the conventional technology, a PLMN identifier allocated by the first operator is used for access of a terminal device of the first operator. However, in this implementation provided in this application, in addition to including the PLMN identifier used for access of the terminal device of the first operator, the PLMN identifier allocated by the first operator further includes the first PLMN identifier used for access of the terminal device of the second operator. Alternatively, from another perspective, compared with the conventional technology, in this implementation, a new first PLMN identifier is added by the first operator, but the newly added first PLMN identifier is not used for access of the terminal device of the first operator, but is used for access of the terminal device of the second operator.

With reference to the first aspect, in a possible implementation, when the first public land mobile network identifier is the public land mobile network identifier that is allocated by the first operator and that is used for access of the terminal device of the second operator, the second operator is any one of N operators, the N operators do not include the first operator, and N is a positive integer.

In other words, in this implementation, all the N operators may be considered as the second operator herein, and a terminal device of each of the N operators performs access by selecting the first PLMN identifier.

With reference to the first aspect, in a possible implementation, when the first public land mobile network identifier is the public land mobile network identifier that is allocated by the first operator and that is used for access of the terminal device of the second operator, the at least one public land mobile network identifier that the access network device supports for access of a terminal device further includes a second public land mobile network identifier used for access of a terminal device of a third operator, and at least one public land mobile network identifier that a second access and mobility management function of the first operator supports for access of a terminal device includes the second public land mobile network identifier, where the third operator and the first operator share the access network device, and the access network device interacts with a core network device of the third operator through the core network device of the first operator.

In other words, in this implementation, when the access network device broadcasts the first information to indicate the at least one broadcast PLMN identifier, the at least one PLMN identifier broadcast by the access network device includes the first PLMN identifier and the second PLMN identifier, and the at least one PLMN identifier that the second access and mobility management function of the first operator supports for access of a terminal device includes the second PLMN identifier.

Optionally, the second access and mobility management function and the first access and mobility management function are different network elements. It should be understood that, in this implementation, the at least one PLMN identifier broadcast by the access network device includes the first PLMN identifier and the second PLMN identifier, the at least one PLMN identifier that the first access and mobility management function supports for access of a terminal device includes the first PLMN identifier, and the at least one PLMN identifier that the second access and mobility management function supports for access of a terminal device includes the second PLMN identifier. Optionally, the second access and mobility management function and the first access and mobility management function are a same network element. It should be understood that, in this manner, the at least one PLMN identifier broadcast by the access network device includes the first PLMN identifier and the second PLMN identifier, and the at least one PLMN identifier that the first access and mobility management function supports for access of a terminal device includes the first PLMN identifier and the second PLMN identifier.

In this implementation, because the second PLMN identifier is used for access of the terminal device of the third operator, when the terminal device of the third operator is located in the coverage area of the access network device, the terminal device of the third operator may perform access by selecting the second PLMN identifier. Correspondingly, the access network device determines, based on the second PLMN identifier selected by the terminal device of the third operator and the at least one PLMN identifier that the second access and mobility management function of the first operator supports for access of a terminal device including the second PLMN identifier, the second access and mobility management function of the first operator as an access and mobility management function that supports for access of the terminal device of the third operator, so that the third operator accesses a network.

Optionally, the foregoing content is extensible. If core network devices of a total of M operators all need to share the access network device with the first operator, but a core network device of each of the M operators cannot directly interact with the access network device, M different PLMN identities may be newly added to the at least one public land mobile network identifier that the access network device supports for access of a terminal device, and K access and mobility management functions of the first operator are enabled to support the M different PLMN identities, where the M different PLMN identities are used for access of terminal devices of different operators in the M operators. The M operators include the second operator and the third operator, and M and K are positive integers.

According to a second aspect, this application provides a communication method, applied to a first access and mobility management function. The first access and mobility management function belongs to a first operator, and the method includes: sending third information to an access network device, where the third information indicates at least one public land mobile network identifier that the first access and mobility management function supports for access of a terminal device, the access network device is a shared access network device of the first operator and a second operator, and the access network device needs to interact with a core network device of the second operator through a core network device of the first operator, where at least one public land mobile network identifier that the access network device supports for access of a terminal device includes a first public land mobile network identifier used for access of a terminal device of the second operator, and the at least one public land mobile network identifier that the first access and mobility management function supports for access of a terminal device includes the first public land mobile network identifier.

With reference to the second aspect, in a possible implementation, the first public land mobile network identifier is a public land mobile network identifier of the second operator.

With reference to the second aspect, in a possible implementation, the first public land mobile network identifier is a public land mobile network identifier that is allocated by the first operator and that is used for access of the terminal device of the second operator.

With reference to the second aspect, in a possible implementation, the method further includes: sending a first correspondence between the first public land mobile network identifier and a service provider name corresponding to the terminal device of the second operator to the terminal device of the second operator.

It should be understood that, when the first PLMN identifier is the public land mobile network identifier that is allocated by the first operator and that is used for access of the terminal device of the second operator, that is, the newly added PLMN identifier in the implementation of the first aspect, it should be further ensured that the terminal device of the second operator displays only a name of the second operator. In view of this, in this implementation, when the first PLMN identifier used for access of the terminal device of the second operator is a PLMN identifier newly added by the first operator, the first access and mobility management function further sends the first correspondence between the first public land mobile network identifier and the service provider name corresponding to the terminal device of the second operator to the terminal device of the second operator. Correspondingly, after receiving the first correspondence, the terminal device of the second operator displays, when selecting the first PLMN identifier, the service provider name corresponding to the terminal device of the second operator.

It should be noted herein that a manner of enabling the first access and mobility management function to learn of the first correspondence is not limited in this embodiment.

For example, when the second operator is any one of N operators, and the N operators do not include the first operator, that is, when a terminal device of each of the N operators performs access by using the first PLMN identifier, there are the following four implementation solutions.

In a first implementation solution, a second correspondence between the first public land mobile network identifier, at least one public land mobile network identifier included in the second operator, and the service provider name corresponding to the terminal device of the second operator is configured in a unified data management function of the second operator. Before sending the first correspondence between the first public land mobile network identifier and the service provider name corresponding to the terminal device of the second operator to the terminal device of the second operator, the method further includes: sending fourth information to the unified data management function, where the fourth information is used to request the first correspondence, the fourth information includes a home public land mobile network identifier of the terminal device of the second operator, and the home public land mobile network identifier is included in the at least one public land mobile network identifier included in the second operator. Correspondingly, after receiving the fourth information, the unified data management function sends the first correspondence to the first access and mobility management function based on the home public land mobile network identifier carried in the fourth information, so that the first access and mobility management function learns of the first correspondence.

In a second implementation solution, a third correspondence between the first public land mobile network identifier, an identifier of the terminal device of the second operator, and the service provider name corresponding to the terminal device of the second operator is configured in a unified data management function of the second operator. Before sending the first correspondence between the first public land mobile network identifier and the service provider name corresponding to the terminal device of the second operator to the terminal device of the second operator, the method further includes: sending fifth information to the unified data management function, where the fifth information is used to request the first correspondence, and the fifth information includes the identifier of the terminal device of the second operator. Correspondingly, after receiving the fifth information, the unified data management function sends the first correspondence to the first access and mobility management function based on the identifier of the terminal device of the second operator carried in the fifth information, so that the first access and mobility management function learns of the first correspondence.

In a third implementation solution, a fourth correspondence between the first public land mobile network identifier, at least one home public land mobile network identifier included in the second operator, and the service provider name corresponding to the terminal device of the second operator is configured in the first access and mobility management function. Before sending the first correspondence between the first public land mobile network identifier and the service provider name corresponding to the terminal device of the second operator to the terminal device of the second operator, the method further includes: obtaining the first correspondence based on a home public land mobile network identifier of the terminal device of the second operator and the fourth correspondence, where the home public land mobile network identifier of the terminal device of the second operator is included in the at least one home public land mobile network identifier included in the second operator.

In a fourth implementation solution, a fifth correspondence between the first public land mobile network identifier, an identifier of the terminal device of the second operator, and the service provider name corresponding to the terminal device of the second operator is configured in the first access and mobility management function. Before sending the first correspondence between the first public land mobile network identifier and the service provider name corresponding to the terminal device of the second operator to the terminal device of the second operator, the method further includes: obtaining the first correspondence based on the identifier of the terminal device of the second operator and the fifth correspondence.

For another example, when the at least one public land mobile network identifier that the access network device supports for access of a terminal device further includes a second public land mobile network identifier used for access of a terminal device of a third operator, and at least one public land mobile network identifier that a second access and mobility management function of the first operator supports for access of a terminal device includes the second public land mobile network identifier, where the third operator and the first operator share the access network device, and the access network device interacts with a core network device of the third operator through the core network device of the first operator, there are the following two implementation solutions. In a first implementation solution, the first correspondence is configured in a unified data management function of the second operator. Before sending the first correspondence between the first public land mobile network identifier and the service provider name corresponding to the terminal device of the second operator to the terminal device of the second operator, the method further includes: sending sixth information to the unified data management function, where the sixth information is used to request the first correspondence, and the sixth information includes the first public land mobile network identifier. Correspondingly, after receiving the sixth information, the unified data management function sends the first correspondence to the first access and mobility management function based on the first public land mobile network identifier carried in the sixth information, so that the first access and mobility management function learns of the first correspondence.

In a second implementation solution, the first correspondence is configured in the first access and mobility management function. Sending the first correspondence between the first public land mobile network identifier and the service provider name corresponding to the terminal device of the second operator to the terminal device of the second operator includes: when the terminal device of the second operator selects the first public land mobile network identifier, sending the first correspondence between the first public land mobile network identifier and the service provider name corresponding to the terminal device of the second operator to the terminal device of the second operator.

According to a third aspect, this application provides a communication method, applied to a terminal device. The terminal device belongs to a second operator, and the method includes: receiving a first correspondence that is between a first public land mobile network identifier and a service provider name corresponding to the terminal device of the second operator and that is sent by a first access and mobility management function of a first operator, where the first operator and the second operator share an access network device, and the access network device interacts with a core network device of the second operator through a core network device of the first operator; and when the terminal device selects the first public land mobile network identifier, displaying the service provider name corresponding to the terminal device of the second operator based on the first correspondence, where at least one public land mobile network identifier that the access network device supports for access of a terminal device includes the first public land mobile network identifier used for access of the terminal device of the second operator, and at least one public land mobile network identifier that the first access and mobility management function supports for access of a terminal device includes the first public land mobile network identifier. With reference to the third aspect, in a possible implementation, the first public land mobile network identifier is a public land mobile network identifier that is allocated by the first operator and that is used for access of the terminal device of the second operator.

With reference to the third aspect, in possible implementation, the method further includes: sending a registration request message, where the registration request message is used to request to access a network, the registration request message includes second information, and the second information indicates that the terminal device of the second operator selects the first public land mobile network identifier.

It should be understood that, when the terminal device of the second operator initially accesses a network, if the first PLMN identifier is a newly added PLMN identifier, because the network may not configure the newly added first PLMN identifier for the terminal device of the second operator, there may be a problem that the terminal device of the second operator does not know to select the first PLMN identifier for access. In view of this, in this application, when the first PLMN identifier is the PLMN identifier that is allocated by the first operator and that is used for access of the terminal device of the second operator, the method further includes: The first access and mobility management function sends seventh information to the terminal device of the second operator, where the seventh information indicates the terminal device of the second operator to select the first public land mobile network identifier for access, and the seventh information carries the first public land mobile network identifier. Correspondingly, after receiving the seventh information, when the terminal device of the second operator wants to access the network, the terminal device of the second operator selects the first PLMN identifier for access.

According to a fourth aspect, this application provides a communication apparatus. The communication apparatus may be used in an access network device. The access network device is a shared access network device of a first operator and a second operator, the access network device needs to interact with a core network device of the second operator through a core network device of the first operator, and the apparatus includes: a sending module, configured to broadcast first information within a coverage area of the access network device, where the first information indicates at least one public land mobile network identifier that the access network device supports for access of a terminal device; and the at least one public land mobile network identifier that the access network device supports for access of a terminal device includes a first public land mobile network identifier used for access of a terminal device of the second operator, and at least one public land mobile network identifier that a first access and mobility management function of the first operator supports for access of a terminal device includes the first public land mobile network identifier.

With reference to the fourth aspect, in a possible implementation, the communication apparatus further includes a receiving module. The receiving module is configured to receive a registration request message sent by the terminal device of the second operator, where the registration request message is used to request to access a network, the registration request message includes second information, and the second information indicates that the terminal device of the second operator selects the first public land mobile network identifier. Correspondingly, the sending module is further configured to send the registration request message to the first access and mobility management function.

With reference to the fourth aspect, in a possible implementation, the receiving module is further configured to receive third information sent by the first access and mobility management function, where the third information indicates the at least one public land mobile network identifier that the first access and mobility management function supports for access of a terminal device.

With reference to the fourth aspect, in a possible implementation, the first public land mobile network identifier is a public land mobile network identifier of the second operator.

With reference to the fourth aspect, in a possible implementation, the first public land mobile network identifier is a public land mobile network identifier that is allocated by the first operator and that is used for access of the terminal device of the second operator.

With reference to the fourth aspect, in a possible implementation, the second operator is any one of N operators, the N operators do not include the first operator, and N is a positive integer.

With reference to the fourth aspect, in a possible implementation, the at least one public land mobile network identifier that the access network device supports for access of a terminal device further includes a second public land mobile network identifier used for access of a terminal device of a third operator, and at least one public land mobile network identifier that a second access and mobility management function of the first operator supports for access of a terminal device further includes the second public land mobile network identifier, where the third operator and the first operator share the access network device, and the access network device interacts with a core network device of the third operator through the core network device of the first operator.

According to a fifth aspect, this application provides a communication apparatus. The apparatus is used in a first access and mobility management function. The first access and mobility management function belongs to a first operator, and the apparatus includes: a sending module, configured to send third information to an access network device, where the third information indicates at least one public land mobile network identifier that the first access and mobility management function supports for access of a terminal device, the access network device is a shared access network device of the first operator and a second operator, and the access network device needs to interact with a core network device of the second operator through a core network device of the first operator, where at least one public land mobile network identifier that the access network device supports for access of a terminal device includes a first public land mobile network identifier used for access of a terminal device of the second operator, and the at least one public land mobile network identifier that the first access and mobility management function supports for access of a terminal device includes the first public land mobile network identifier.

With reference to the fifth aspect, in a possible implementation, the first public land mobile network identifier is a public land mobile network identifier of the second operator.

With reference to the fifth aspect, in a possible implementation, the first public land mobile network identifier is a public land mobile network identifier that is allocated by the first operator and that is used for access of the terminal device of the second operator.

With reference to the fifth aspect, in a possible implementation, the sending module is further configured to send a first correspondence between the first public land mobile network identifier and a service provider name corresponding to the terminal device of the second operator to the terminal device of the second operator.

With reference to the fifth aspect, in a possible implementation, the second operator is any one of N operators, the N operators do not include the first operator, and N is a positive integer.

With reference to the fifth aspect, in a possible implementation, a second correspondence between the first public land mobile network identifier, at least one public land mobile network identifier included in the second operator, and the service provider name corresponding to the terminal device of the second operator is configured in a unified data management function of the second operator. The sending module is further configured to send fourth information to the unified data management function, where the fourth information is used to request the first correspondence, the fourth information includes a home public land mobile network identifier of the terminal device of the second operator, and the home public land mobile network identifier is included in the at least one public land mobile network identifier included in the second operator. Correspondingly, the apparatus further includes a receiving module. The receiving module is configured to receive the first correspondence sent by the unified data management function.

With reference to the fifth aspect, in a possible implementation, a third correspondence between the first public land mobile network identifier, an identifier of the terminal device of the second operator, and the service provider name corresponding to the terminal device of the second operator is configured in a unified data management function of the second operator. The sending module is further configured to send fifth information to the unified data management function, where the fifth information is used to request the first correspondence, and the fifth information includes the identifier of the terminal device of the second operator. The receiving module is further configured to receive the first correspondence sent by the unified data management function.

With reference to the fifth aspect, in a possible implementation, a fourth correspondence between the first public land mobile network identifier, at least one home public land mobile network identifier included in the second operator, and the service provider name corresponding to the terminal device of the second operator is configured in the first access and mobility management function. The apparatus further includes a processing module. The processing module is further configured to obtain the first correspondence based on a home public land mobile network identifier of the terminal device of the second operator and the fourth correspondence, where the home public land mobile network identifier of the terminal device of the second operator is included in the at least one home public land mobile network identifier included in the second operator.

With reference to the fifth aspect, in a possible implementation, a fifth correspondence between the first public land mobile network identifier, an identifier of the terminal device of the second operator, and the service provider name corresponding to the terminal device of the second operator is configured in the first access and mobility management function. The processing module is further configured to obtain the first correspondence based on the identifier of the terminal device of the second operator and the fifth correspondence.

With reference to the fifth aspect, in a possible implementation, the at least one public land mobile network identifier that the access network device supports for access of a terminal device further includes a second public land mobile network identifier used for access of a terminal device of a third operator, and at least one public land mobile network identifier that a second access and mobility management function of the first operator supports for access of a terminal device includes the second public land mobile network identifier.

With reference to the fifth aspect, in a possible implementation, the first correspondence is configured in a unified data management function of the second operator. The sending module is further configured to send sixth information to the unified data management function, where the sixth information is used to request the first correspondence, and the sixth information includes the first public land mobile network identifier. The receiving module is further configured to receive the first correspondence sent by the unified data management function.

With reference to the fifth aspect, in a possible implementation, the first correspondence is configured in the first access and mobility management function. The processing module is further configured to: when the terminal device of the second operator selects the first public land mobile network identifier, send the first correspondence between the first public land mobile network identifier and the service provider name corresponding to the terminal device of the second operator to the terminal device of the second operator.

According to a sixth aspect, this application provides a communication apparatus. The communication apparatus may be used in a terminal device. The terminal device belongs to a second operator. Specifically, a receiving module is configured to receive a first correspondence that is between a first public land mobile network identifier and a service provider name corresponding to the terminal device of the second operator and that is sent by a first access and mobility management function, where the first operator and the second operator share an access network device, and the access network device interacts with a core network device of the second operator through a core network device of the first operator. A processing module is configured to: when the terminal device selects the first public land mobile network identifier, display the service provider name corresponding to the terminal device of the second operator based on the first correspondence, where at least one public land mobile network identifier that the access network device supports for access of a terminal device includes the first public land mobile network identifier used for access of the terminal device of the second operator, and at least one public land mobile network identifier that the first access and mobility management function supports for access of a terminal device includes the first public land mobile network identifier.

With reference to the fifth aspect, in a possible implementation, the first public land mobile network identifier is a public land mobile network identifier that is allocated by the first operator and that is used for access of the terminal device of the second operator.

According to a sixth aspect, this application provides a communication apparatus, including a memory and a processor. The memory is configured to store program instructions. The processor is configured to invoke the program instructions in the memory to perform the method according to any one of the first aspect, the second aspect, or the third aspect, or the possible implementations of the first aspect, the second aspect, or the third aspect.

According to a seventh aspect, this application provides a communication system, including the communication apparatus according to the third aspect and the communication apparatuses according to the fourth aspect and the fifth aspect.

According to an eighth aspect, this application provides a computer-readable medium. The computer-readable medium stores program code to be executed by a computer, and the program code includes instructions used to perform the method according to any one of the first aspect to the third aspect or the possible implementations of the first aspect to the third aspect.

According to a ninth aspect, this application provides a computer program product. The computer program product includes computer program code, and when the computer program code is run on a computer, the computer is enabled to implement the method according to any one of the first aspect to the third aspect or the possible implementations of the first aspect to the third aspect.

For technical effects brought by any one of the implementations of the fourth aspect to the ninth aspect, refer to the technical effects brought by any one of the first aspect to the third aspect and the possible implementations of the first aspect to the third aspect. Details are not described again.

### BRIEF DESCRIPTION OF DRAWINGS

FIG. 1 is a diagram of an application scenario according to this application;
FIG. 2 is a diagram of an architecture of a communication system to which a communication method according to this application is applicable;
FIG. 3 is a schematic flowchart of a communication method according to an embodiment of this application;
FIG. 4 is a diagram of broadcasting a PLMN identifier of a second operator according to an embodiment of this application;
FIG. 5 is a schematic flowchart of a communication method according to an embodiment of this application;
FIG. 6 is a diagram of newly adding a same PLMN identifier to N operators according to an embodiment of this application;
FIG. 7A and FIG. 7B are a schematic flowchart of a communication method according to an embodiment of this application;
FIG. 8 is a diagram of newly adding M PLMN identities to M operators according to an embodiment of this application;
FIG. 9A and FIG. 9B are a schematic flowchart of a communication method according to an embodiment of this application;
FIG. 10 is a diagram of a communication apparatus according to an embodiment of this application; and
FIG. 11 is a diagram of a communication apparatus according to another embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system or a new radio access technology (new radio access technology, NR), a satellite communication system.

The technical solutions provided in this application may be further applied to a future communication system, for example, a 6th generation (6th generation, 6G) mobile communication system. This is not limited in this application.

Before a communication method provided in embodiments of this application is described, terms in embodiments of this application are first briefly described.
1. Terminal device: The terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. In the following embodiments, the terminal device, the terminal, and the UE may be alternately used, but meanings expressed by the terminal device, the terminal, and the UE are the same.

The terminal device may be a device that provides voice/data connectivity for a user, for example, a handheld device or a vehicle-mounted device that has a wireless connection function. Currently, some examples of the terminal may be a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

In embodiments of this application, an apparatus configured to implement a function of the terminal device, that is, a terminal apparatus, may be a terminal device, or may be an apparatus, for example, a chip system or a chip, that can support the terminal device in implementing the function, and the apparatus may be mounted in the terminal device. In embodiments of this application, the chip system may include a chip, or may include a chip and another discrete component.

2. Access network (access network, AN) device: An access network may provide a network access function for an authorized user in a specific area, and can use transmission tunnels of different quality based on user levels, service requirements, and the like. The access network may be access networks using different access technologies. Currently, there are two types of radio access technologies: a 3rd generation partnership project (3rd generation partnership project, 3GPP) access technology and a non-3GPP (non-3GPP) access technology. The 3GPP access technology is an access technology that complies with the 3GPP standard specification. For example, an access network device in a 5G system is referred to as a next generation node base station (next generation node base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements an access network function based on a wireless communication technology may be referred to as a radio access network (radio access network, RAN). The radio access network can manage radio resources, and provide an access service for the terminal device, to complete forwarding of a control signal and user data between the terminal and a core network. A radio access network device may include, for example, but is not limited to: a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission and reception point (transmission and reception point, TRP), or the like, or may be a gNB or a transmission point (a TRP or a TP) in a 5G (for example, NR) system, or one or one group of antenna panels (including a plurality of antenna panels) of a base station in a 5G system, or may be a network node constituting a gNB or a transmission point, for example, a BBU, a distributed unit (distributed unit, DU), or a base station in a next generation communication 6G system. A specific technology and a specific device form that are used by the radio access network device are not limited in this application. The radio access network device may include a gNB-central unit (central unit, CU) and a gNB-DU. The gNB-CU and the gNB-DU are connected through an F1 interface. The CU is connected to the core network through a next generation (next generation, NG) interface. The gNB-DU includes a function of a physical layer (physical layer, PHY)/medium access control (medium access control, MAC)/radio link control (radio link control, RLC) layer, and is configured to provide an access service for a relay device attached to the access network device. The gNB-DU may be connected to the gNB-CU through the F1 interface. The gNB-DU may alternatively be connected to a terminal device or a mobile-termination (mobile-termination, MT) function of a mobile relay through a Uu interface. In embodiments of this application, a function of the base station may be performed by a module (for example, a chip) in the base station, or may be performed by a control subsystem including the function of the base station. The control subsystem including the function of the base station herein may be a control center in the foregoing terminal application scenarios such as the smart grid, the industrial control, the smart transportation, and the smart city. A terminal function may be performed by a module (for example, a chip or a modem) in the terminal, or may be performed by an apparatus including the terminal function.

3. Core network: The core network mainly includes a user plane function (user equipment, UPF) and a control plane function of a data plane. The user plane function is mainly responsible for data packet forwarding, quality of service (quality of service, QoS) control, charging information collection, connection to an external network, and the like, and includes related functions of a serving gateway (serving gateway, SGW) and a public data network gateway (public data network gateway, PDN-GW) in a long term evolution (long term evolution, LTE) technology. The control plane function is mainly responsible for service procedure interaction, and delivering a data packet forwarding policy, a QoS control policy, and the like to a user plane. For example, network elements in the control plane function mainly include a mobility management function (access and mobility function, AMF), a session management function (session management function, SMF), a policy control function (policy control function, PCF), an application function (application function, AF), a network exposure function (network exposure function, NEF), and the like. The AMF network element is connected to an access network device through an NG interface, and may manage access of the terminal device to the core network, for example, access control of the terminal device, mobility management of the terminal device, attachment and detachment of the terminal device, triggering an LMF network element to position the terminal device, forwarding a positioning-related message between the terminal device and the LMF network element, and forwarding a positioning-related message between the access network device and the LMF network element. The LMF network element may position the terminal device based on a positioning request of the AMF network element. The SMF network element is mainly responsible for creation, deletion, and the like of a user protocol data unit (protocol data unit, PDU) session, and maintaining a PDU session context and user plane forwarding pipeline information. The PCF is mainly responsible for executing policy control, and is similar to a policy and charging rules function (policy and charging rules function, PCRF) network element in the long term evolution (long term evolution, LTE) technology, including generating and managing a user, a session, a quality of service (quality of service, QoS) flow processing policy, and quality of service, generating a charging rule, and delivering a corresponding rule to the UPF network element via the SMF. The AF network element is mainly responsible for providing functions of various services, can interact with the core network via the NEF network element, and can interact with a policy management framework to perform policy management. The NEF is configured to: provide a framework, authentication, and an interface that are related to network capability exposure, and information between a network function of a 5G system and another network function.

4. Data network (data network, DN): The data network is a service network that provides a data transmission service for the user, for example, an IP multi-media service (IP Multi-media Service, IMS) or an internet (internet). The UE access the data network by using a protocol data unit (protocol data unit, PDU) session established between the UE and the DN.

### 5. PLMN selection priority of the terminal device

When accessing a network, the terminal device first performs a cell search and selection procedure. The procedure includes searching for a frequency, obtaining a physical cell identifier (physical cell identifier, PCI) of a cell, obtaining a master information block (master information block, MIB), obtaining a system information block 1 (SIB1), selecting a PLMN, selecting a cell, and the like. When selecting a PLMN, the terminal device selects, based on a specific priority, an appropriate PLMN for access.

Specifically, priorities of selecting a PLMN by the terminal device are as follows.
(1) RPLMN (Registered PLMN)
   The RPLMN is a PLMN that is registered last time, is a PLMN with which the terminal device registers during a tracking area update/initial attach (attach), and has a highest priority.
(2) EPLMN (Equivalent PLMN)
   The EPLMN is an equivalent PLMN of the RPLMN, and is a PLMN that can provide a same service as the RPLMN for the terminal device.
(3) EHPLMN (Equivalent Home PLMN)
   The EHPLMN is an equivalent PLMN of an HPLMN, and is stored in a universal subscriber identity module (universal subscriber identity module, USIM) card. The terminal device uses a PLMN in this list to replace the HPLMN extracted from an international mobile subscriber identification (international mobile subscriber identification, IMSI) code for a PLMN selection process. A priority of the EHPLMN is the same as that of the HPLMN. When the RPLMN is the HPLMN, the EPLMN is equal to the EHPLMN. When the RPLMN is not the HPLMN, the EPLMN is not equal to the EHPLMN.
(4) HPLMN (Home PLMN)
   The home (Home) PLMN is a PLMN in which the terminal device registers. The terminal device has only one HPLMN, and the HPLMN is obtained by using the IMSI.
(5) UPLMN (User Controlled PLMN)
   The UPLMN is a PLMN controlled by a user, that is, a PLMN with which the terminal device has registered when manual network selection is performed, and is stored in the USIM card.
(6) OPLMN (Operator Controlled PLMN)
   The OPLMN is a PLMN controlled by an operator and is written into the USIM card.
(7) VPLMN (Visited PLMN)
   The VPLMN is a visited PLMN, and is a PLMN in which the terminal device is currently located. The visited PLMN may be the same as the HPLMN.
(8) FPLMN (Forbidden PLMN)
   The FPLMN is a forbidden PLMN, and is a PLMN with which the terminal device cannot register.

### 6. Mechanism for broadcasting a PLMN identifier by an access network device

Generally, the access network device broadcasts only a network number of an operator to which the access network device belongs.

In a scenario, assuming that the access network device exclusively belongs to one operator, the access network device broadcasts only a PLMN identifier (identity, ID) of the operator. For example, assuming that a PLMN identifier of an operator 1 includes only a PLMN ID 1 and a PLMN ID 2, the access network device of the operator 1 broadcasts only the PLMN ID 1 and the PLMN ID 2.

In another scenario, assuming that the access network device is shared by a plurality of operators, and each operator can directly interact with the shared access network device, when the access network device performs broadcasting, a broadcast message includes a PLMN identifier of each of the plurality of operators. For example, assuming that both a PLMN ID 1 and a PLMN ID 2 belong to a PLMN identifier of an operator 1, both a PLMN ID 3 and a PLMN ID 4 belong to a PLMN identifier of an operator 3, and both the operator 1 and the operator 3 are physically connected to the access network device, when the access network device of the operator performs broadcasting, a broadcast message includes the PLMN ID 1, the PLMN ID 2, the PLMN ID 3, and the PLMN ID 4.

Communication technologies are updated rapidly. If each operator independently deploys a new network each time a new technology is upgraded, challenges such as high network deployment costs and completing high network coverage in a short period of time are faced. Therefore, a network sharing technology becomes an important manner for each operator to deploy a network. Sharing an access network (which may also be referred to as access network sharing) is a network sharing manner, and means that at least two operators share an access network device and a carrier resource of one of the operators.

In the access network sharing manner, in most cases, the access network device can directly interact with a core network of each operator. In this case, terminal devices of different operators can directly access, through the access network device, respective core networks of operators to which the terminal devices belong.

Specifically, an implementation in which the terminal devices of different operators directly access, through the access network device, the respective core networks of the operators to which the terminal devices belong is as follows.
(1) The access network device broadcasts a PLMN identifier of each operator that can directly interact with the access network device.
(2) When a terminal device of each operator needs to access a network, the terminal device of each operator sends a registration request message to a network side, where the registration request message is used to request to access the network, and the registration request message includes a PLMN identifier selected by the terminal device.

It should be understood that, in this step, when the terminal device of each operator selects the PLMN identifier, because a message broadcast by the access network device includes a PLMN identifier of an operator to which the terminal device belongs, the terminal device selects, based on a PLMN selection priority of the terminal device, the PLMN identifier of the operator to which the terminal device belongs.

(3) The access network device receives the PLMN identifier reported by the terminal device, and determines an AMF for the terminal device, to implement network access of the terminal device through the determined AMF. At least one PLMN identifier that the selected AMF supports for access of a terminal device includes the reported PLMN identifier.

Generally, a PLMN identifier is configured in the AMF, and is used by the AMF to determine a PLMN identifier that the AMF supports for access of a terminal device. Specifically, a PLMN identifier of an operator to which an AMF belongs is configured in the AMF of each operator. For example, assuming that a PLMN ID 1 and a PLMN ID 2 belong to a PLMN identifier of an operator 1, and a PLMN ID 3 and a PLMN ID 4 belong to a PLMN identifier of an operator 3, at least one PLMN identifier that is configured in an AMF of the operator 1 and that the AMF supports for access of a terminal device includes the PLMN ID 1 and the PLMN ID 2, and at least one PLMN identifier that is configured in an AMF of the operator 3 and that the AMF supports for access of a terminal device includes the PLMN ID 3 and the PLMN ID 4.

For ease of description, in this application, the at least one PLMN identifier that the AMF supports for access of a terminal device is also referred to as at least one PLMN identifier supported by the AMF.

Specifically, a principle of determining, by the access network device, the AMF based on the PLMN identifier selected by the terminal device is as follows: In an initialization process of the access network device (for example, when the access network device is powered on), an AMF that can directly interact with the access network device notifies the access network device of at least one PLMN identifier supported by the AMF. Therefore, PLMN identities supported by different AMFs are locally configured in the access network device, so that the access network device can determine, based on the PLMN identifier selected by the terminal device and local information, an AMF that supports the PLMN identifier selected by the terminal device.

However, a person skilled in the art finds that when an access network needs to be shared, it is inevitable that a core network device of an operator can interact with an access network device only through a core network device of another operator (that is, it may be considered that there is no direct connection between the core network device of the operator and the access network device). In this case, there is a problem that a terminal device of the operator cannot access a network.

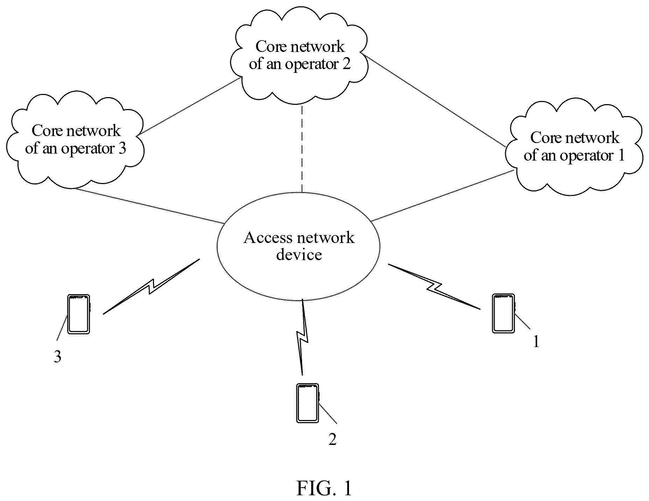

For ease of understanding, FIG. 1 is used as an example for description. FIG. 1 is a diagram of an application scenario according to this application. As shown in FIG. 1, an access network device is originally dedicated to an operator 1, and the access network device is connected to a core network of the operator 1, so that a terminal device 1 of the operator 1 accesses the core network of the operator 1. Currently, the operator 1, an operator 2, and an operator 3 cooperate with each other, and the operator 1 shares the access network device with the operator 2 and the operator 3. However, a core network device of the operator 2 can interact with the access network device only through a core network device of the operator 1 (it may also be considered that there is no direct connection between the core network device of the operator 2 and the access network device). In this case, for the scenario shown in FIG. 1, when the access network device broadcasts a PLMN identifier, the PLMN identifier includes only a PLMN identifier of the operator 1 and a PLMN identifier of the operator 3. In this case, the terminal device 1 of the operator 1 can access the core network of the operator 1, and a terminal device 3 of the operator 3 can access a core network of the operator 3. However, for a terminal device 2 of the operator 2, if roaming is not considered (for example, no roaming agreement is signed between the operator 2 and the operator 1), there is a problem that the terminal device 2 cannot access a network.

It is noted herein that, in FIG. 1, only an example in which three operators share a same access network device is used, but this does not constitute a limitation on this application. For example, two operators may share a same access network device, or more operators share a same access network device.

In view of this, this application provides a communication method and a communication apparatus, so that in a scenario in which there is no direct connection between a core network of an operator and a shared access network, a terminal device of the operator can also access a network.

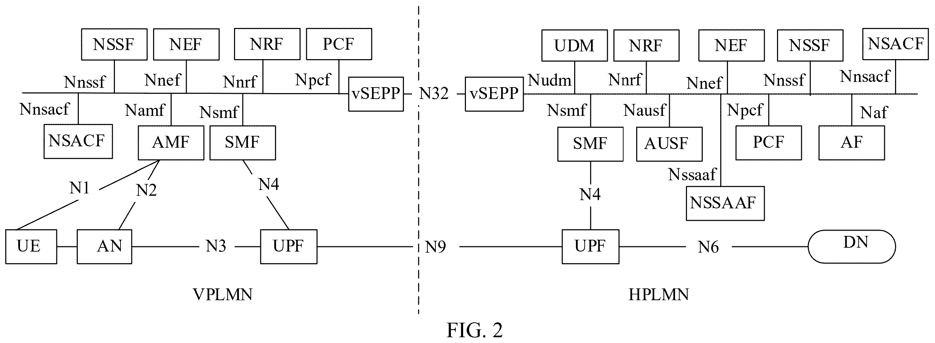

For ease of understanding of embodiments of this application, the following describes in detail a network architecture applicable to embodiments of this application with reference to FIG. 2.

As shown in FIG. 2, the system architecture includes one or more of the following network elements: an authentication server function (authentication server function, AUSF) network element, a network exposure function (network exposure function, NEF) network element, a policy control function (policy control function, PCF) network element, a unified data management (unified data management, UDM) network element, a network repository function (network repository function, NRF) network element, an application function (application function, AF) network element, an access and mobility management function (access and mobility management function, AMF) network element, a session management function (session management function, SMF) network element, an access network (access network, AN) network element; a user plane function (user plane function, UPF) network element, a network slice selection function (network slice selection function, NSSF) network element, a network slice admission control function (network slice admission control function, NSACF), and a network slice-specific authentication and authorization function (network slice-specific Authentication and authorization function, NSSAAF) network element. For functions of some network elements, refer to the descriptions in the foregoing network element descriptions. For details, refer to a known technology. Details are not described herein again.

In the foregoing architecture, a part other than the AN and the DN may be referred to as a core network part. In the network shown in FIG. 1, some network elements may communicate with each other based on a service-oriented interface. Nnssf, Nnef, Nnrf, Npcf, Nudm, Naf, Nusf, Namf, and Npcf in FIG. 2 are service-oriented interfaces of the network elements.

Specifically, for the architecture shown in FIG. 2, an HPLMN is a PLMN of an operator to which a terminal device belongs (namely, a home PLMN of the terminal device), and a VPLMN is a PLMN of a visited operator (namely, a visited PLMN). More specifically,
signaling exchange between the VPLMN and the HPLMN is performed through a security edge protection proxy (security edge protection proxy, SEPP).

The HPLMN is responsible for managing subscription information, a session policy, and the like of the terminal device, and a session anchor is located in the HPLMN. The terminal device accesses a data network (DN) of the HPLMN, and the HPLMN provides a service for the roaming terminal device.

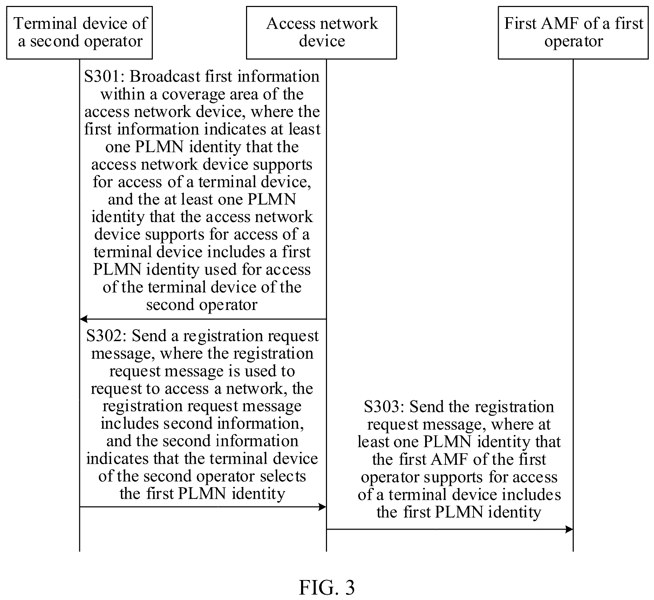

Both a visited location and a home location have a charging capability, and both the visited location and the home location have a capability of legally obtaining information about the terminal device. The following describes in detail the communication method provided in embodiments of this application with reference to FIG. 3.

FIG. 3 is a schematic flowchart of communication method according to an embodiment of this application. As shown in FIG. 3, the method includes the following steps.

S301: An access network device broadcasts first information within a coverage area of the access network device, where the first information indicates at least one public land mobile network identifier that the access network device supports for access of a terminal device.

In this embodiment, the access network device is shared by a first operator and a second operator, and the access network device needs to interact with a core network device of the second operator through a core network device of the first operator. In other words, the access network device can interact with the core network device of the second operator through the core network device of the first operator. In other words, the access network device can directly interact with the core network device of the first operator, the core network device of the first operator can directly interact with the core network device of the second operator, and the access network device cannot directly interact with the core network device of the second operator.

In this embodiment, when the access network device can directly interact with the core network device of the first operator but cannot directly interact with the core network device of the second operator, it may also be considered that there is a direct connection relationship between the access network device and the core network device of the first operator, and there is no direct connection relationship between the access network device and the core network device of the second operator. Generally, the access network device is locally configured with at least one PLMN identifier that the access network device supports for access of a terminal device, and broadcasts the at least one PLMN identifier within the coverage area.

In this application, the at least one PLMN identifier that the access network device supports for access of a terminal device is also referred to as at least one PLMN identifier supported by the access network device.

Currently, the at least one PLMN identifier configured on the shared access network device is a PLMN identifier of an operator whose core network device directly interacts with the access network device. For example, if the access network device can directly interact with both a core network device of an operator 1 and a core network device of an operator 3, that is, the operator 1 and the operator 3 are the first operator described herein, in a conventional technology, a PLMN identifier that is locally configured on the access network device and that can be supported by the access network device includes a PLMN identifier of the operator 1 and a PLMN identifier of the operator 3. Correspondingly, the PLMN identifiers broadcast by the access network device includes the PLMN identifier of the operator 1 and the PLMN identifier of the operator 3.

In this case, for a terminal device of the second operator that cannot directly interact with the access network device, when the terminal device of the second operator is located in the coverage area of the access network device, because the at least one PLMN identifier broadcast by the access network device does not include a PLMN identifier of the second operator, when roaming is not considered, there may be a problem that the terminal device of the second operator cannot select an appropriate PLMN identifier, and consequently cannot access a network.

In view of this, in this application, to enable the terminal device of the second operator to access the network in a sharing scenario, when the access network device broadcasts the first information to indicate, to a terminal device of each operator, the at least one PLMN identifier supported by the access network device, the at least one indicated PLMN identifier further includes a first PLMN identifier, where the first PLMN identifier is used for access of the terminal device of the second operator.

In other words, in this application, in addition to including a PLMN identifier of the first operator (for example, the PLMN identifier of the first operator is also referred to as a third PLMN identifier), the at least one public land mobile network identifier supported by the access network device further includes the first PLMN identifier used for access of the terminal device of the second operator. In other words, in the conventional technology, when broadcasting at least one supported PLMN identifier, the access network device broadcasts only a PLMN identifier of the first operator whose core network device can directly interact with the access network device, and does not broadcast the first PLMN identifier used for access of the terminal device of the second operator, but in this embodiment, when broadcasting the at least one PLMN identifier that can be supported by the access network device, the access network device not only broadcasts the PLMN identifier of the first operator, but also broadcasts the first PLMN identifier used for access of the terminal device of the second operator.

During specific implementation, the first information may be, for example, a broadcast PLMN list sent by the access network device, and the broadcast PLMN list includes the PLMN identifier of the first operator and the first PLMN identifier.

It should be noted herein that a specific form of the first PLMN identifier is not limited in this embodiment.

For example, in a first implementation, the first PLMN identifier may be the PLMN identifier of the second operator.

For another example, in a second implementation, the first PLMN identifier is a public land mobile network identifier that is allocated by the first operator and that is used for access of the terminal device of the second operator. It should be understood that, in the conventional technology, a PLMN identifier allocated by the first operator is used for access of a terminal device of the first operator. However, in this implementation, in addition to including the PLMN identifier used for access of the terminal device of the first operator, the PLMN identifier allocated by the first operator further includes the first PLMN identifier used for access of the terminal device of the second operator. Alternatively, from another perspective, in this implementation, a new first PLMN identifier is added by the first operator, but the newly added first PLMN identifier is not used for access of the terminal device of the first operator, but is used for access of the terminal device of the second operator.

S302: The terminal device of the second operator sends a registration request message, where the registration request message is used to request to access a network, the registration request message includes second information, and the second information indicates that the terminal device of the second operator selects the first public land mobile network identifier.

In this embodiment, when the terminal device of the second operator is located in the coverage area of the access network device, the terminal device of the second operator may learn, by obtaining the first information broadcast by the access network device, of the at least one PLMN identifier supported by the access network device.

In this embodiment, because the at least one PLMN identifier supported by the access network device includes the first PLMN identifier used for access of the terminal device of the second operator, the terminal device of the second operator can select the first PLMN identifier, and then include, in the registration request message used to request to access the network, the second information indicating that the first PLMN identifier is selected, to notify the access network device that the terminal device of the second operator selects the first PLMN identifier for access. The following describes an implementation of enabling the terminal device of the second operator to select the first PLMN identifier for access.

As described in S301, there are two manners for the first PLMN identifier.

In a first manner, the first PLMN identifier is the PLMN identifier of the second operator.

In a second manner, the first PLMN identifier is the public land mobile network identifier that is allocated by the first operator and that is used for access of the terminal device of the second operator, that is, the first PLMN identifier is a newly added PLMN identifier.

It should be understood that for the first manner, when the terminal device of the second operator is located in the coverage area of the shared access network device, because the first PLMN identifier is the PLMN identifier of the second operator, the terminal device of the second operator may preferentially select, based on a PLMN identifier selection priority, the first PLMN identifier for access.

For the second manner, the first PLMN identifier is a newly added PLMN identifier. Therefore, when the terminal device of the second operator initially wants to access the network, because the network may not have configured the newly added first PLMN identifier for the terminal device of the second operator (or the network may have configured the newly added first PLMN identifier for the terminal device of the second operator, for example, the newly added first PLMN identifier has been configured when the terminal device is delivered from a factory), the terminal device of the second operator does not know that the first PLMN identifier should be selected for access. In view of this, during specific implementation, a first access and mobility management function of the first operator sends seventh information to the terminal device of the second operator, where the seventh information indicates the terminal device of the second operator to select the first PLMN identifier for access, and the seventh information carries the first PLMN identifier. Correspondingly, after receiving the seventh information, the terminal device of the second operator selects the first PLMN identifier for access when wanting to access the network. In other words, in this implementation solution, the seventh information may be sent to the terminal device of the second operator through a network side, to configure the first PLMN identifier for the terminal device of the second operator. In this way, when the terminal device of the second operator needs to access the network again, because the first PLMN identifier has been configured, and the at least one broadcast PLMN identifier includes the first PLMN identifier, the first PLMN identifier is selected.

Further, after selecting the first PLMN identifier, the terminal device of the second operator may send, to the access network device, the registration request message used to request to access the network, where the registration request message carries the first PLMN identifier.

S303: The access network device sends the registration request message of the terminal device of the second operator to the first access and mobility management function, and correspondingly, the first access and mobility management function receives the registration request message of the terminal device of the second operator, where at least one PLMN identifier that the first access and mobility management function supports for access of a terminal device includes the first PLMN identifier.

The first access and mobility management function may be, for example, an AMF in a 5G communication system, or an MME in a 4G communication system. A specific name of the first access and mobility management function is not limited. For example, the first access and mobility management function may also be referred to as another name in a future system.

For ease of description, the first access and mobility management function is referred to as a first AMF in the following embodiments of this application.

Generally, when the first AMF can directly interact with the access network device, in an initialization process of the access network device (for example, when the access network device is powered on), the first AMF notifies the access network device of at least one PLMN identifier that the first AMF supports for access of a terminal device of an operator to which the first AMF belongs, so that when the terminal device of the operator to which the first AMF belongs accesses a network, the access network device can select the first AMF.

In this application, for ease of description, the at least one PLMN identifier that the first AMF supports for access of a terminal device is also referred to as at least one PLMN identifier supported by the first AMF.

It should be understood that, even if the terminal device of the second operator selects the first PLMN identifier by using the method in S301 and S302, because the access network device cannot find an AMF that supports the first PLMN identifier, there is still a problem that the terminal device of the second operator cannot access the network. In view of this, in this embodiment, to enable the terminal device of the second operator to access the network in the sharing scenario, it is configured that the at least one PLMN identifier supported by the first AMF of the first operator also includes the first PLMN identifier. In other words, in this implementation, in addition to including the PLMN identifier of the first operator, the at least one PLMN identity supported by the first AMF of the first operator further includes the first PLMN identifier. In this way, when the first AMF of the first operator indicates, to the access network device by using third information, the at least one PLMN identifier supported by the first AMF, the access network device can learn that the first AMF also supports the first PLMN identifier used for access of the terminal device of the second operator.

In other words, in the conventional technology, the at least one PLMN identity supported by the first AMF of the first operator includes only the PLMN identifier used for access of the terminal device of the first operator, and does not include the first PLMN identifier used for access of the terminal device of the second operator. Correspondingly, when the first AMF of the first operator indicates, to the access network device, at least one PLMN identifier supported by the first AMF, the at least one indicated PLMN identifier does not include the first PLMN identifier used for access of the terminal device of the second operator.

For example, it is assumed that the PLMN identifier of the first operator is a PLMN ID 1. In the conventional technology, when the first AMF indicates, to the access network device, at least one PLMN identifier supported by the first AMF, the at least one PLMN identifier includes the PLMN ID 1. However, in the technical solution of this application, when the first AMF indicates, to the access network device, the at least one PLMN identifier supported by the first AMF, in addition to including the PLMN ID 1, the at least one PLMN identifier further includes a PLMN ID 2, where the PLMN ID 2 is used for access of the terminal device of the second operator.

During specific implementation, the third information may be, for example, a PLMN support list sent by the first AMF to the access network device, and the PLMN support list includes the at least one PLMN identifier supported by the first AMF.

It should be understood that, after the at least one PLMN identifier supported by the first AMF includes the first PLMN identifier and the first AMF notifies, by using the third information, the access network device that the at least one PLMN identifier supported by the first AMF also includes the first PLMN identifier, if the terminal device of the second operator selects the first PLMN identifier for access, the access network device may determine the first AMF as an AMF used by the second operator to complete network access, and send the registration request message of the terminal device of the second operator to the first AMF. Correspondingly, the first AMF receives the registration request message of the terminal device of the second operator, and completes a registration procedure of the second operator, so that the terminal device of the second operator accesses the network.

In other words, in the communication method provided in this embodiment, when the first operator and the second operator share the access network device, and the access network device needs to interact with the core network device of the second operator through the core network device of the first operator, the at least one PLMN identifier that is broadcast by the access network device and that is supported by the access network device includes the first PLMN identifier and the at least one public land mobile network identifier supported by the first AMF of the first operator also includes the first PLMN identifier. In this way, the terminal device of the second operator accesses the network.

To make the technical solutions provided in this application clearer, the following further describes, with reference to three detailed embodiments, an embodiment of how to enable the terminal device of the second operator to access the network when the second operator and the first operator share the access network device but the core network device of the second operator cannot directly interact with the access network device.

Embodiment 1: The PLMN identifier of the second operator is used as the first PLMN identifier. Specifically, during implementation of Embodiment 1, the at least one PLMN identifier supported by the access network device includes the PLMN identifier of the second operator, and at least one PLMN identifier supported by one AMF (the AMF may be considered as the first AMF) of the first operator also includes the PLMN identifier of the second operator. Correspondingly, the at least one PLMN identifier broadcast by the access network device includes the first PLMN identifier. It should be understood that, in the first implementation solution, if the first PLMN identifier is the PLMN identifier of the second operator, when the terminal device of the second operator is located in the coverage area of the access network device, because the at least one broadcast PLMN identifier includes the PLMN identifier of the second operator, the terminal device of the second operator preferentially selects, based on a PLMN identifier selection priority, the PLMN identifier of the second operator for access.

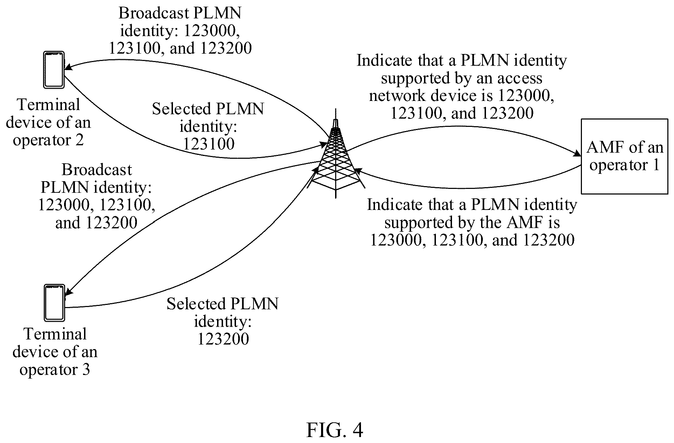

For example, as shown in FIG. 4, it is assumed that there are three operators, referred to as an operator 1, an operator 2, and an operator 3. A PLMN identifier of the operator 1 is 123000, a PLMN identifier of the operator 2 is 123100, and a PLMN identifier of the operator 3 is 123200. An access network device of the operator 1 is shared with the operator 2 and the operator 3, but core network devices of the operator 2 and the operator 3 cannot directly interact with the access network device. In this case, to enable terminal devices of the operator 2 and the operator 3 to access networks, during implementation:
(1) it is configured that a PLMN identifier supported by the access network device includes 123000, 123100, and 123200; and
(2) it is configured that a PLMN identifier supported an AMF of the operator 1 includes 123000, 123100, and 123200.

For example, it may be configured that in addition to including 123000, a PLMN identifier supported by only one AMF of the operator 1 further includes 123100 and 123200.

For example, if the operator 1 has a plurality of AMFs, it may be configured that a PLMN identifier supported by one of the AMFs includes 123000 and 123100, and a PLMN identifier supported by another AMF includes 123000 and 123200.

Then, each AMF of the operator 1 notifies, by using third information, the access network device of a PLMN identifier supported by each AMF of the operator 1, so that the access network device learns of the PLMN identifier supported by each AMF of the operator 1.

Optionally, the access network device may also notify the AMF of the operator 1 that the access network device supports 123000, 123100, and 123200.

It may be understood that, for the embodiment shown in FIG. 4, after the access network device supports 123000, 123100, and 123200 and the AMF of the operator 1 supports 123000, 123100, and 123200, a PLMN identifier broadcast by the access network device includes 123000, 123100, and 123200. In this case,
the terminal device of the operator 2 selects 123100 based on a PLMN selection priority, and includes 123100 (which may be considered as second information) in a registration request message. Correspondingly, after receiving the registration request message of the operator 2, the access network device may determine one AMF (supporting 123100) of the operator 1 as an appropriate AMF.

Similarly, the terminal device of the operator 3 selects 123200 based on the PLMN selection priority, and includes 123200 (which may be considered as second information) in a registration request message. Correspondingly, after receiving the registration request message of the operator 3, the access network device may determine one AMF (supporting 123200) of the operator 1 as an appropriate AMF.

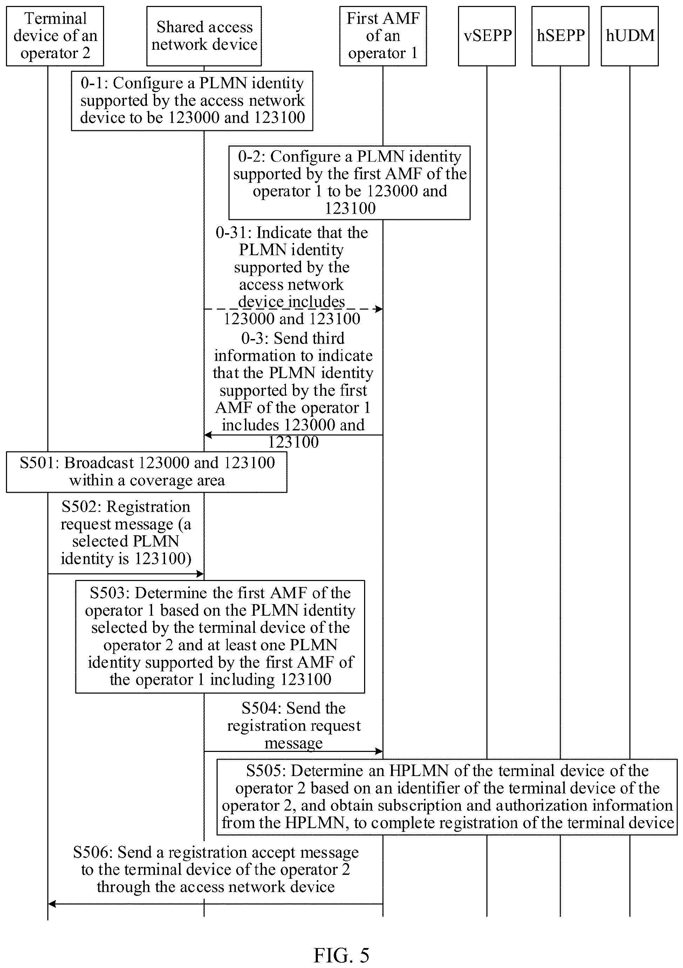

With reference to FIG. 5, a process of how to enable the terminal device of the operator 2 to access the network is described below by using the example in FIG. 4 as an example in a manner of a flowchart. A process of enabling the terminal device of the operator 3 to access the network may be similar to that in FIG. 5. Details are not described herein.

As shown in FIG. 5, the process includes:
0-1: Configure a PLMN identifier supported by the access network device to be 123000 and 123100.
0-2: Configure a PLMN identifier supported by a first AMF of the operator 1 to be 123000 and 123100.
0-3: The first AMF of the operator 1 sends third information to the access network device, to indicate that the PLMN identifier supported by the first AMF of the operator 1 includes 123000 and 123100.

Optionally, the process may further include: 0-31: The access network device indicates, to the first AMF of the operator 1, that the PLMN identifier supported by the access network device includes 123000 and 123100. For example, the access network device indicates, to the first AMF of the operator 1 by using an NG SETUP REQUEST message, that the PLMN identifier supported by the access network device includes 123000 and 123100. Correspondingly, the third information sent by the first AMF of the operator 1 to the access network device may be carried in an NG SETUP RESPONSE message.

After the conditions 0-1 to 0-3 are met, the terminal device of the operator 2 accesses the network in the following manner.

S501: The access network device broadcasts 123000 and 123100 within a coverage area.

S502: The terminal device of the operator 2 located in a range of an access network preferentially selects, based on a PLMN priority, 123100 for access, and includes 123100 in a registration request message.

S503: The access network device determines the first AMF of the operator 1 based on 123100 selected by the terminal device of the operator 2 and at least one PLMN identifier supported by the first AMF of the operator 1 including 123100.

S504: The access network device sends the registration request message of the terminal device of the operator 2 to the first AMF of the operator 1.

S505: The first AMF of the operator 1 determines an HPLMN of the terminal device of the operator 2 based on an identifier of the terminal device of the operator 2, and obtains subscription and authorization information from the HPLMN, to complete registration of the terminal device. S506: The first AMF of the operator 1 sends a registration accept message to the terminal device of the operator 2 through the access network device.

It can be learned that, in the example in FIG. 5, in a manner in which the access network device further supports the PLMN identifier of the operator 2 and the first AMF of the operator 1 and further supports the PLMN identifier of the operator 2, even in a scenario in which the core network device of the operator 2 cannot directly interact with the access network device, the terminal device of the operator 2 can still access the network.

It should be noted that, in the implementation solution 1, the operator 2 and the operator 3 are merely used as examples for description. However, it should be understood that the operator 2 and the operator 3 do not constitute a limitation on this application. For example, terminal devices of more operators whose core network devices cannot directly interact with the access network device can access networks with reference to the methods in FIG. 4 and FIG. 5. For example, in addition to the operator 2 and the operator 3, an operator 4 also wants to share the access network device with the operator 1. In this case, the at least one PLMN identifier supported by the access network device may further include a PLMN identifier of the operator 4, and at least one PLMN identifier supported by the first AMF of the operator 1 includes the PLMN identifier of the operator 4, to complete network access of a terminal device of the operator 4.

Embodiment 2: The first PLMN identifier is the public land mobile network identifier that is allocated by the first operator and that is used for access of the terminal device of the second operator, and the second operator is any one of N operators. In other words, in Embodiment 2, the first PLMN identifier is a PLMN identifier newly added by the first operator, and the first PLMN identifier is used for access of terminal devices of the N operators.

The N operators do not include the first operator, the N operators share the access network device with the first operator, a core network device of each of the N operators needs to interact with the access network device through the core network device of the first operator, and N is a positive integer.

It should be understood that, in Embodiment 2, each of the N operators may be considered as the second operator.

Specifically, during implementation of Embodiment 2, the at least one PLMN identifier supported by the access network device needs to include the newly added first PLMN identifier, and at least one PLMN identifier supported by one AMF (the AMF may be considered as the first AMF) of the first operator also needs to include the newly added first PLMN identifier. Correspondingly, the at least one PLMN identifier broadcast by the access network device includes the first PLMN identifier, and all the terminal devices of the N operators perform access by using the first PLMN identifier.

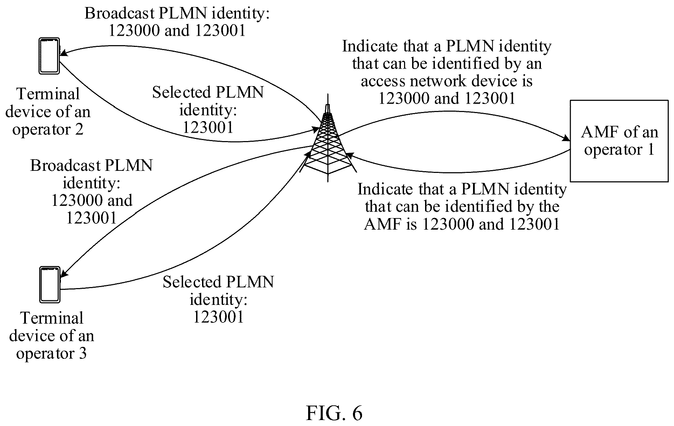

For example, as shown in FIG. 6, it is assumed that there are three operators, referred to as an operator 1, an operator 2, and an operator 3. A PLMN identifier of the operator 1 is 123000. An access network device of the operator 1 is shared with the operator 2 and the operator 3, and core network devices of the operator 2 and the operator 3 cannot directly interact with the access network device. In this case, to enable terminal devices of the operator 2 and the operator 3 to access networks, it is configured that a PLMN identifier supported by the access network device further includes a newly added first PLMN identifier 123001 in addition to including 123000, and it is configured that a PLMN identifier supported by a first AMF of the operator 1 further includes the newly added first PLMN identifier 123001 in addition to including 123000. Then, the first AMF of the operator 1 notifies, by using third information, the access network device that the first AMF of the operator 1 supports 123000 and 123001, so that the access network device learns that the first AMF of the operator 1 supports 123000 and 123001. Then, when the access network device broadcasts the supported 123000 and 123001, both the terminal device of the operator 2 and the terminal device of the operator 3 perform access by using 123001.

However, as described in S302, if the first PLMN identifier is a newly added PLMN identifier, when the terminal device of each of the N operators initially wants to access a network, the network may not have configured the newly added first PLMN identifier for the terminal devices of the N operators. Consequently, the terminal devices of the N operators do not know that the first PLMN identifier should be selected for access. In view of this, during specific implementation of Embodiment 2, the first AMF of the operator 1 may indicate the terminal devices of the N operators to select the first PLMN identifier for access. The first AMF of the operator 1 may send seventh information to the terminal devices of the operator 2 and the operator 3 through the access network device, to indicate to select 123001 for access. Correspondingly, the terminal devices of the operator 2 and the operator 3 select 123001 for access when selecting PLMN identities.

Generally, after selecting the PLMN identifier, the terminal device determines, based on the selected PLMN identifier, a PLMN name that needs to be displayed. More specifically, during displaying, the terminal device determines the PLMN name based on the following priorities: a PLMN name in a USIM, a PLMN name provided by network identity and time zone (network identity and time zone, NITZ), and a PLMN name stored in mobile equipment (mobile equipment, ME). In addition, the terminal device determines, based on a configuration, whether to display the PLMN name or a name of an operator to which the terminal device belongs (service provider name, SPN), or display both the PLMN name and the service provider name. As shown in Table 1, two bits (bit) in a configuration file of the terminal device indicate conditions for displaying the SPN and the PLMN name.

**Table 1: Comparison of functions of different network sharing technologies**

| bit 1 | bit 2 | Display content |
|---|---|---|
| 0 | x | (Non-roaming) Display an SPN; and do not display a PLMN name of a registered network. |
| 1 | x | (Non-roaming) Display an SPN; and display a PLMN name of a registered network. |
| x | 0 | (Roaming) Display an SPN; and display a PLMN name of a registered network. |
| x | 1 | (Roaming) Do not display an SPN; and display a PLMN name of a registered network. |

It should be understood that, for the terminal device, only the name of the operator to which the terminal device belongs needs to be displayed. However, in this embodiment, because the first PLMN identifier is a PLMN identifier newly added by the first operator, how to enable the terminal device of the second operator to display only a name of the second operator becomes a problem that needs to be resolved.

In view of this, in this embodiment, if the access network device broadcasts the newly added first PLMN identifier, and the terminal device of the second operator selects the newly added first PLMN identifier for access, to enable the terminal device of the second operator to display the name of the second operator, the technical solution of this application further includes: The first AMF of the first operator sends a first correspondence between the first PLMN identifier and an SPN corresponding to the terminal device of the second operator to the terminal device of the second operator. Correspondingly, after receiving the first correspondence, the terminal device of the second operator updates a configuration (for example, updates a PLMN ID associated with an SPN in the USIM, that is, configures the first PLMN identifier as the PLMN ID associated with the SPN; for another example, configures a PLMN name corresponding to the first PLMN identifier as an SPN) based on the first correspondence. When selecting the first PLMN identifier, the terminal device displays the SPN corresponding to the terminal device of the second operator. It should be noted herein that how to learn of the first correspondence between the first PLMN identifier of the terminal device of the second operator and the SPN corresponding to the terminal device of the second operator is not limited in this embodiment.

For example, in a first implementation solution, a second correspondence between the first PLMN identifier, at least one PLMN identifier included in the second operator, and the SPN corresponding to the terminal device of the second operator is configured in a UDM of the second operator. Then, the first AMF of the first operator sends fourth information to the UDM of the second operator, where the fourth information is used to request the first correspondence, the fourth information includes a home PLMN identifier of the terminal device of the second operator, and the home PLMN identifier is included in the at least one PLMN identifier included in the second operator. Correspondingly, after receiving the fourth information, the UDM of the second operator determines, based on the home PLMN identifier carried in the fourth information and the stored second correspondence, the first correspondence between the first PLMN identifier and the SPN corresponding to the terminal device of the second operator, and sends the first correspondence to the first AMF of the first operator, so that the first AMF of the first operator learns of the first correspondence.

In other words, in the first implementation solution, the second correspondence between the first PLMN identifier, the at least one PLMN identifier included in the second operator, and the SPN corresponding to terminal device of the second operator is configured in the UDM of the second operator. Then, if the first AMF of the first operator determines, based on the home PLMN identifier of the terminal device of the second operator, that the first correspondence should be obtained from the UDM of the second operator, the first AMF of the first operator requests the first correspondence from the UDM of the second operator, and includes the home PLMN identifier of the terminal device of the second operator in the fourth information used for requesting. Correspondingly, when receiving the fourth information, because the home PLMN identifier carried in the fourth information is included in the at least one PLMN identifier included in the second operator, the UDM of the second operator sends the first correspondence to the first AMF of the first operator.

For example, in a second implementation solution, a third correspondence between the first PLMN identifier, an identifier of the terminal device of the second operator, and the SPN corresponding to the terminal device of the second operator is configured in a UDM of the second operator. Then, the first AMF of the first operator sends fifth information to the UDM of the second operator, where the fifth information is used to request the first correspondence, and the fifth information includes the identifier of the terminal device of the second operator. Correspondingly, after receiving the fifth information, the UDM of the second operator sends the first correspondence to the first AMF of the first operator based on the identifier that is of the terminal device of the second operator and that is carried in the fifth information, so that the first AMF of the first operator learns of the first correspondence.

Optionally, the identifier that is of the terminal device of the second operator and that is in the third correspondence may be replaced with a terminal device list, and the terminal device list includes the identifier of the terminal device of the second operator; or
the identifier that is of the terminal device of the second operator and that is in the third correspondence may alternatively be replaced with a user group identifier (UE Group ID). In this case, the first AMF may determine that the terminal device of the second operator belongs to the UE group ID, and then include the UE group ID in a request message sent to the UDM. The UDM determines the first correspondence based on the UE group ID and the third correspondence.

In other words, in the second implementation solution, the third correspondence between the first PLMN identifier, the identifier of the terminal device of the second operator, and the SPN corresponding to the terminal device of the second operator is configured in the UDM of the second operator. Then, the first AMF of the first operator determines, based on the identifier of the terminal device of the second operator, that the first correspondence should be obtained from the UDM of the second operator, requests the first correspondence from the UDM of the second operator, and includes the identifier of the terminal device of the second operator in the fifth information used for requesting. Correspondingly, when receiving the fifth information, because the identifier that is of the terminal device and that is carried in the fifth information is the identifier that is of the terminal device of the second operator and that is in the third correspondence, the UDM of the second operator sends the first correspondence to the first AMF of the first operator. It should be noted herein that a specific form of the identifier of the terminal device of the second operator in the second implementation solution is not limited in this embodiment. For example, the identifier may be a permanent equipment identifier (permanent equipment identifier, PEI) of the terminal device of the second operator, or may be a subscription permanent identifier (subscription permanent identifier, SUPI) of the terminal device of the second operator.

For example, in a third implementation solution, a fourth correspondence between the first PLMN identifier, at least one home PLMN identifier included in the second operator, and the SPN corresponding to the terminal device of the second operator is configured in the first AMF of the first operator. Then, the first AMF of the first operator obtains the first correspondence based on a home PLMN identifier of the terminal device of the second operator and the fourth correspondence, where the home PLMN identifier of the terminal device of the second operator is included in the at least one home PLMN identifier included in the second operator.

It should be understood that the third implementation solution differs from the first implementation solution in that the correspondence between the first PLMN identifier, the at least one home PLMN identifier included in the second operator, and the SPN corresponding to the terminal device of the second operator is configured in the first AMF of the first operator, instead of in the UDM of the second operator. In this solution, if it is determined that a home PLMN identifier is the home PLMN identifier of the terminal device of the second operator, because the home PLMN identifier of the terminal device of the second operator is included in the fourth correspondence, the first AMF of the first operator may determine the first correspondence based on the fourth correspondence.

For example, in a fourth implementation solution, a fifth correspondence between the first PLMN identifier, an identifier of the terminal device of the second operator, and the SPN corresponding to the terminal device of the second operator is configured in the first AMF of the first operator. Then, the first AMF of the first operator obtains the first correspondence based on the identifier of the terminal device of the second operator and the fifth correspondence.

Optionally, the identifier that is of the terminal device of the second operator and that is in the fifth correspondence may be replaced with a terminal device list, and the terminal device list includes the identifier of the terminal device of the second operator; or
the identifier that is of the terminal device of the second operator and that is in the fifth correspondence may alternatively be replaced with a user group identifier (UE Group ID). In this case, the first AMF may determine that the terminal device of the second operator belongs to the UE group ID, and determine the first correspondence based on the fifth correspondence.

It should be understood that the fourth implementation solution differs from the second implementation solution in that the correspondence between the first PLMN identifier, the identifier of the terminal device of the second operator, and the SPN corresponding to the terminal device of the second operator is configured in the AMF of the first operator, instead of in the UDM of the second operator. In this solution, because the identifier of the terminal device of the second operator is included in the fifth correspondence, the first correspondence may be determined based on the fifth correspondence.

For ease of understanding, with reference to the scenario in which the terminal devices of the operator 2 and the operator 3 use the same newly added first PLMN identifier 123001 in the example in FIG. 6, a method for ensuring that the terminal device of the operator 2 accesses the network and the terminal device of the operator 2 displays an SPN corresponding to the terminal device of the operator 2 is described below in a manner of a flowchart.

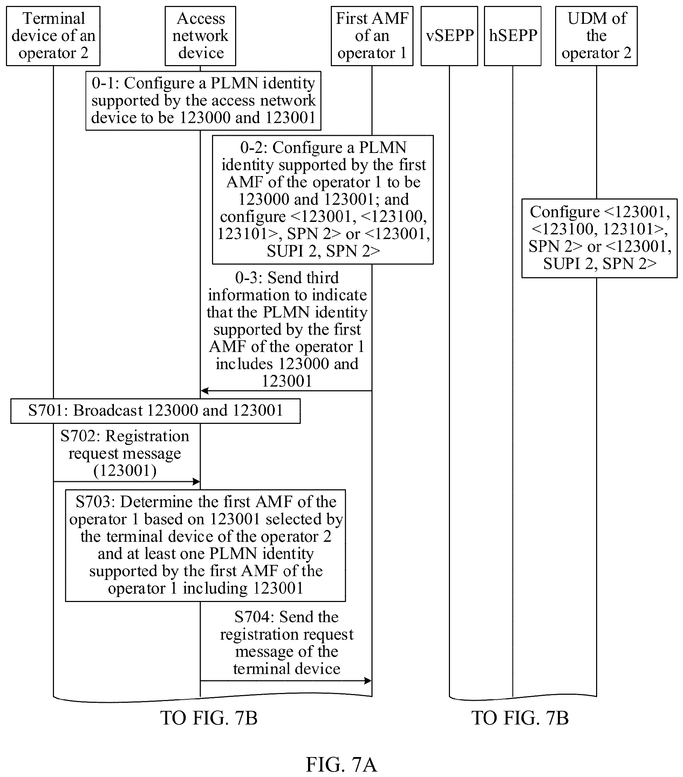

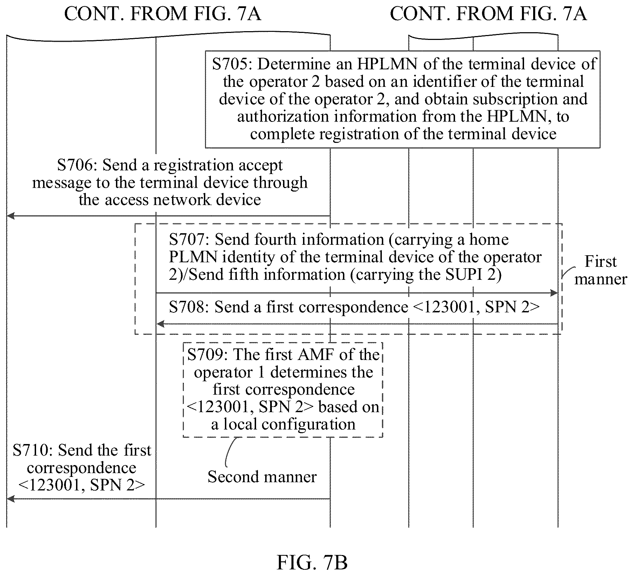

As shown in FIG. 7A and FIG. 7B, the method includes:
0-1: Configure a PLMN identifier supported by the access network device to be 123000 and 123001.
0-2: Configure a PLMN identifier supported by a first AMF of the operator 1 to be 123000 and 123001.
0-3: The first AMF of the operator 1 sends third information to the access network device, to indicate that the PLMN identifier supported by the first AMF of the operator 1 includes 123000 and 123001.

Optionally, the access network device may also indicate, to the first AMF of the operator 1, that the PLMN identifier supported by the access network device includes 123000 and 123001. For example, the access network device indicates, to the first AMF of the operator 1 by using an NG SETUP REQUEST message, that the PLMN identifier supported by the access network device includes 123000 and 123001. Correspondingly, the third information sent by the first AMF of the operator 1 to the access network device may be carried in an NG SETUP RESPONSE message. After the conditions 0-1 to 0-3 are met, the terminal device of the operator 2 accesses the network in the following manner.

S701: The access network device broadcasts 123000 and 123001 within a coverage area.

S702: The terminal device of the operator 2 located in a range of an access network selects 123001 for access, and includes 123001 in a registration request message.

Similarly, 123001 is a newly added PLMN identifier. When the terminal device of the operator 2 initially wants to access the network, because the network may not have configured the newly added PLMN identifier for the terminal device of the operator 2, the terminal device of the operator 2 cannot select 123001. In this case, in this example, the first AMF of the operator 1 may send, to the terminal device of the operator 2 through the access network device, information (which may be considered as seventh information) indicating to select 123001 for access. Correspondingly, after the terminal device of the operator 2 receives the information indicating to select 123001 for access, the terminal device of the operator 2 selects 123001 for access.

S703: The access network device determines the first AMF of the operator 1 based on 123001 selected by the terminal device of the operator 2 and at least one PLMN identifier supported by the first AMF of the operator 1 including 123001.

S704: The access network device sends the registration request message of the terminal device of the operator 2 to the first AMF of the operator 1.

S705: The first AMF of the operator 1 determines an HPLMN (for example, an HPLMN ID is 123100) of the terminal device of the operator 2 based on an identifier of the terminal device of the operator 2, and obtains subscription and authorization information from the HPLMN, to complete registration of the terminal device.

S706: The first AMF of the operator 1 sends a registration accept message to the terminal device of the operator 2 through the access network device.

Further, to enable the terminal device of the operator 2 to display a name of the operator 2 after selecting 123001, the first AMF of the operator 1 needs to obtain the first correspondence.

In a first manner, as shown in FIG. 7A and FIG. 7B, <123001, <123100, 123101>, SPN 2> or <123001, SUPI 2, SPN 2> is preconfigured in a UDM of the operator 2, where 123001 is the newly added first PLMN identifier, <123100, 123101> is at least one PLMN identifier included in the operator 2, the SUPI 2 is an SUPI of the terminal device of the operator 2, and the SPN 2 is an SPN corresponding to the terminal device of the operator 2. Then, the UDM of the operator 2 determines, based on a request of the first AMF of the operator 1, to send a first correspondence <123001, SPN 2> to the first AMF of the operator 1. Further, after obtaining the first correspondence <123001, SPN 2>, the first AMF of the operator 1 sends the first correspondence to the terminal device of the operator 2.

Specifically, as shown in S707 and S708 in FIG. 7B, logic in which the UDM of the operator 2 determines, based on the request of the first AMF of the operator 1, to send the first correspondence <123001, SPN 2> to the first AMF of the operator 1 includes the following content.
(1) If <123001, <123100, 123101>, SPN 2> is configured in the UDM of the operator 2, the first AMF of the operator 1 may send, to the UDM of the operator 2, fourth information used to request the first correspondence, and include a home PLMN identifier (for example, 123100) of the terminal device of the operator 2 in the fourth information. Correspondingly, the UDM of the operator 2 retrieves the responded first correspondence <123001, SPN 2>, and sends the first correspondence to the first AMF of the operator 1 (S708 in FIG. 7B).
(2) If <123001, SUPI 2, SPN 2> is configured in the UDM of the operator 2, the first AMF of the operator 1 may send, to the UDM of the operator 2, fifth information used to request the first correspondence, and include the SUPI 2 in the fifth information. Correspondingly, the UDM of the operator 2 retrieves the responded first correspondence <123001, SPN 2>, and sends the first correspondence to the first AMF of the operator 1 (S711 in FIG. 7B).

In a second manner, as shown in FIG. 7A and FIG. 7B, <123001, <123100, 123101>, SPN 2> is preconfigured in the first AMF of the operator 1, or <123001, SUPI 2, SPN 2> is preconfigured in the first AMF of the operator 1. Then, the first AMF of the operator 1 performs S709: Determine a first correspondence <123001, SPN 2> based on a local configuration.

Specifically, logic in which the first AMF of the operator 1 determines the first correspondence <123001, SPN 2> based on the local configuration is as follows.
(1) If <123001, <123100, 123101>, SPN 2> is configured in the first AMF of the operator 1, the first AMF of the operator 1 may obtain the first correspondence <123001, SPN 2> based on an HPLMN identifier (for example, 123100) of the terminal device of the operator 2, where the HPLMN identifier of the terminal device of the operator 2 is included in <123100, 123101>.
(2) If <123001, SUPI 2, SPN 2> is configured in the first AMF of the operator 1, the first AMF of the operator 1 may obtain the first correspondence <123001, SPN 2> based on the SUPI 2 of the terminal device of the operator 2.

After obtaining the first correspondence in the foregoing two manners, the first AMF of the operator 1 may perform S710: Send <123001, SPN 2> to the terminal device of the operator 2.

It can be learned that, in the communication method provided in this embodiment, the terminal device of the operator 2 can access the network, the terminal device of the operator 2 can further correctly display the name of the operator 2 when selecting 123001.

Embodiment 3: M PLMN identities are allocated by the first operator, where different PLMN identities in the M PLMN identities are used for access of terminal devices of different operators in M operators.

A core network device of each of the M operators shares a same access network device, but the core network devices of the M operators need to interact with the access network device through the core network device of the first operator, where M is a positive integer.

In other words, in this embodiment, when M operators need to share an access network device with the first operator, but core network devices of the M operators cannot directly interact with the access network device, M PLMN identities are newly added to at least one PLMN identifier supported by the access network device, where different PLMN identities in the M PLMN identities are used for access of terminal devices of different operators in the M operators, and the same M PLMN identities are also newly added to at least one PLMN identifier supported by the AMF of the first operator.

It should be noted herein that a manner of newly adding the M PLMN identities to the at least one PLMN identifier supported by the AMF of the first operator is not limited in this embodiment. For example, the M PLMN identities are newly added to only one AMF of the first operator; or a total of M different PLMN identities are supported by K AMFs of the first operator, where K is a positive integer.

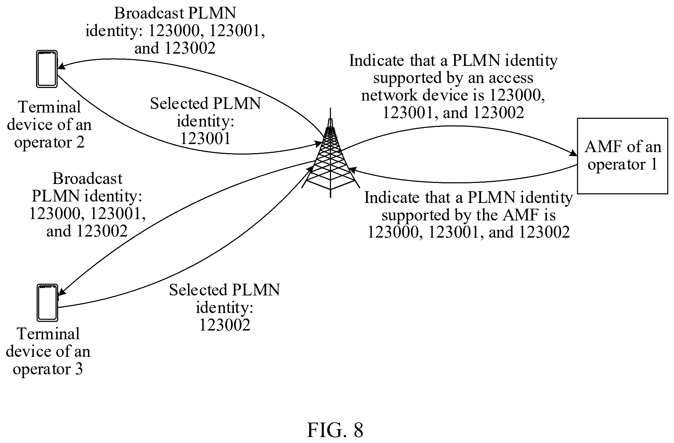

In an example, as shown in FIG. 8, it is assumed that there are three operators, referred to as an operator 1, an operator 2, and an operator 3. A PLMN identifier of the operator 1 is 123000. An access network device of the operator 1 is shared with the operator 2 and the operator 3, and core networks of the operator 2 and the operator 3 cannot directly interact with the access network device. In this case, to enable terminal devices of the operator 2 and the operator 3 to access networks, during implementation:
(1) when a PLMN identifier supported by the access network device is configured, the PLMN identifier 123000 of the operator 1 is included, and a first PLMN identifier 123001 and a second PLMN identifier 123002 are further newly added; and
(2) when a PLMN identifier supported by an AMF of the operator 1 is configured, 123000 is included, and the first PLMN identifier 123001 and the second PLMN identifier 123002 are also newly added.

For example, it is configured that in addition to including 123000, a PLMN identifier supported by one AMF further includes 123001 and 123002.

For example, if the operator 1 has a plurality of AMFs, it is configured that a PLMN identifier supported by one of the AMFs includes 123000 and 123001, and a PLMN identifier supported by another AMF includes 123000 and 123002.

Then, each AMF of the operator 1 notifies, by using third information, the access network device of a PLMN identifier supported by each AMF of the operator 1, so that the access network device learns of the PLMN identifier supported by each AMF of the operator 1. Further, when the access network device broadcasts the supported 123000, 123001, and 123002, the terminal device of the operator 2 selects 123001 for access, and the terminal device of the operator 3 selects 123002 for access.

Same as Embodiment 2, when a terminal device initially wants to access a network, because the network may not have configured, for each operator, a PLMN identifier to be selected for accessing the network, there is also a problem that the terminal device of each operator cannot select a corresponding PLMN identifier for access. Therefore, during implementation of Embodiment 3, similar to Embodiment 2, each AMF of the first operator may indicate, to a terminal device of a corresponding operator, information about a selected PLMN identifier.

FIG. 8 is used as an example. It is assumed that the operator 1 has only one AMF, and a PLMN identifier supported by the AMF includes 123000, 123001, and 123002. The AMF may send, to the terminal device of the operator 2, information indicating to select 123001 for access, and send, to the terminal device of the operator 3, information indicating to select 123002 for access. Correspondingly, the terminal device of the operator 2 selects 123001 when selecting a PLMN identifier, and the terminal device of the operator 3 selects 123002 when selecting a PLMN identifier.

Same as Embodiment 2, during implementation of Embodiment 3, a problem of how to enable a terminal device of each operator to display only a name of the operator to which the terminal device belongs also needs to be considered.

For ease of understanding, in the following, an example in which the M operators are two operators, referred to as a second operator and a third operator, and the first AMF of the first operator supports a first PLMN identifier and a second PLMN identifier is used to describe a solution to the problem of displaying only the name of the operator to which the first AMF belongs provided in this embodiment.

Specifically, during implementation, the first AMF of the first operator may send a first correspondence between the first PLMN identifier and an SPN corresponding to a terminal device of the second operator to the terminal device of the second operator, to indicate the terminal device of the second operator to display, when selecting the first PLMN identifier, the SPN corresponding to the terminal device of the second operator. The first AMF of the first operator sends a sixth correspondence between the second PLMN identifier and an SPN corresponding to a terminal device of the third operator to the terminal device of the third operator, to indicate the terminal device of the third operator to display, when selecting the second PLMN identifier, the SPN corresponding to the terminal device of the third operator.

It may be understood that Embodiment 3 differs from Implementation solution 2 in that PLMN identities selected by terminal devices of different operators during access are different. Therefore, during specific implementation, the second operator may obtain the first correspondence in the following two implementations.

In a first implementation, the first correspondence is configured in a UDM of the second operator. Then, the first AMF of the first operator sends sixth information to the UDM of the second operator, where the sixth information is used to request the first correspondence, and the sixth information includes the first PLMN identifier. Correspondingly, after receiving the sixth information, the UDM of the second operator determines, based on the first PLMN identifier carried in the sixth information, to send the first correspondence to the first AMF of the first operator, so that the first AMF of the first operator learns of the first correspondence.

In a second implementation, the first correspondence is configured in the first AMF of the first operator. Then, the first AMF of the first operator determines, based on the first PLMN identifier selected by the terminal device of the second operator, to send the first correspondence between the first PLMN identifier and the SPN corresponding to the terminal device of the second operator to the terminal device of the second operator.

For ease of understanding, with reference to the scenario in which the terminal device of the operator 2 selects 123001 for access and the terminal device of the operator 3 selects 123002 for access in the example in FIG. 8, a method for ensuring that the terminal device of the operator 2 accesses the network and the terminal device of the operator 2 displays an SPN corresponding to the terminal device of the operator 2 is described below in a manner of a flowchart.

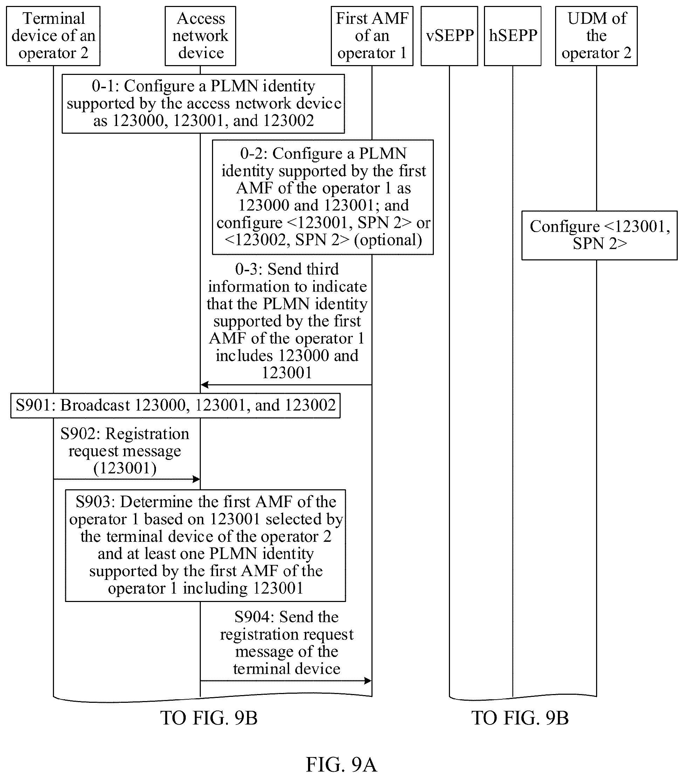

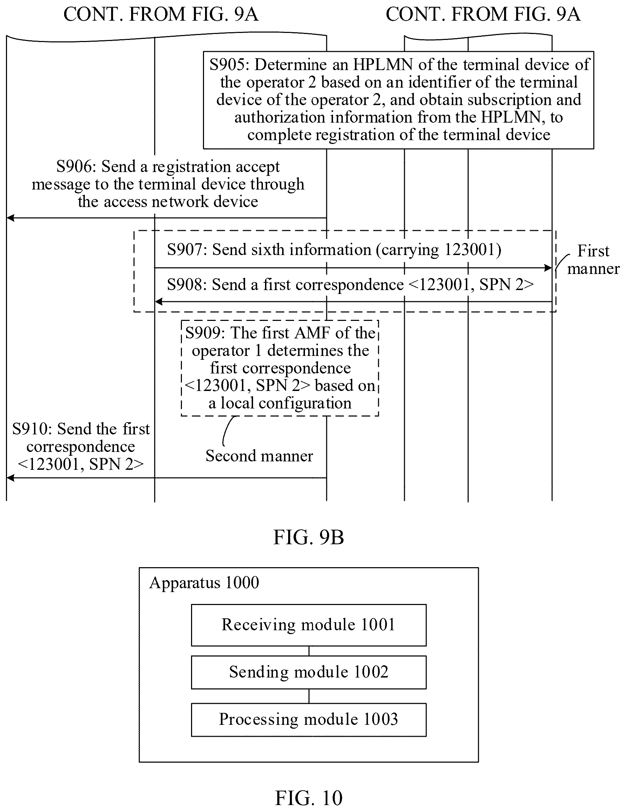

As shown in FIG. 9A and FIG. 9B, the method includes:
0-1: Configure a PLMN identifier supported by the access network device to be 123000, 123001, and 123002.
0-2: Configure a PLMN identifier supported by a first AMF of the operator 1 to be 123000 and 123001.

Optionally, the PLMN identifier supported by the first AMF may further include 123002.

0-3: The first AMF of the operator 1 sends third information to the access network device, to indicate that the PLMN identifier supported by the first AMF of the operator 1 includes 123000 and 123001.

Optionally, the access network device may also indicate, to the first AMF of the operator 1, that the PLMN identifier supported by the access network device includes 123000 and 123001. For example, the access network device indicates, to the first AMF of the operator 1 by using an NG SETUP REQUEST message, that the PLMN identifier supported by the access network device includes 123000 and 123001. Correspondingly, the third information sent by the first AMF of the operator 1 to the access network device may be carried in an NG SETUP RESPONSE message. After the conditions 0-1 to 0-3 are met, the terminal device of the operator 2 accesses the network in the following manner.

S901: The access network device broadcasts 123000, 123001, and 123002 within a coverage area. S902: The terminal device of the operator 2 located in a range of an access network preferentially selects 123001 for access, and includes 123001 in a registration request message.

For detailed descriptions of this step, refer to the descriptions of S702 in FIG. 7A. Details are not described herein again.

S903: The access network device determines the first AMF of the operator 1 based on 123001 selected by the terminal device of the operator 2 and at least one PLMN identifier supported by the first AMF of the operator 1 including 123001.

S904: The access network device sends the registration request message of the terminal device of the operator 2 to the first AMF of the operator 1.

S905: The first AMF of the operator 1 determines an HPLMN of the terminal device of the operator 2 based on an identifier of the terminal device of the operator 2, and obtains subscription and authorization information from the HPLMN, to complete registration of the terminal device. S906: The first AMF of the operator 1 sends a registration accept message to the terminal device of the operator 2 through the access network device.

Further, to enable the terminal device of the operator 2 to display a name of the operator 2 after selecting 123001, there are the following two manners.

In a first manner, as shown in FIG. 9A and FIG. 9B, <123001, SPN 2> is preconfigured in a UDM of the operator 2, where 123001 is a newly added first PLMN identifier, and the SPN 2 is an SPN corresponding to the terminal device of the operator 2. In this case, the first AMF of the operator 1 may send, to the UDM of the operator 2, sixth information used to request the first correspondence and includes 123001 selected by the terminal device of the operator 2 in the sixth information (S907). Correspondingly, the UDM of the operator 2 retrieves the responded first correspondence <123001, SPN 2> and sends the first correspondence to the first AMF of the operator 1 (S908 in FIG. 9B).

In a second manner, as shown in FIG. 9A and FIG. 9B, <123001, SPN 2> is preconfigured in the first AMF of the operator 1, and then S909 is performed. The first AMF of the operator 1 determines the first correspondence <123001, SPN 2> based on 123001 selected by the terminal device of the operator 2.

After obtaining the first correspondence in the foregoing two manners, the first AMF of the operator 1 may perform S910: Send <123001, SPN 2> to the terminal device of the operator 2.

It can be learned that, in the communication method provided in this embodiment, the terminal device of the operator 2 can access the network, the terminal device of the operator 2 can further correctly display the name of the operator 2 when selecting 123001.

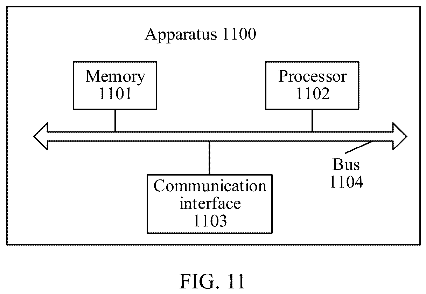

The foregoing describes in detail the communication method in embodiments of this application with reference to FIG. 5 to FIG. 9A and FIG. 9B. The following describes provide a communication apparatus in embodiments of this application with reference to FIG. 10 and FIG. 11.

FIG. 10 is a diagram of a structure of a communication apparatus according to an embodiment of this application. Specifically, as shown in FIG. 10, the apparatus 1000 includes a sending module 1001.

In a first embodiment, the communication apparatus is used in an access network device. The access network device is a shared access network device of a first operator and a second operator, and the access network device interacts with a core network device of the second operator through a core network device of the first operator.

Specifically, in the first embodiment, the sending module 1001 is configured to broadcast first information within a coverage area of the access network device, where the first information indicates at least one public land mobile network identifier that the access network device supports for access of a terminal device; and the at least one public land mobile network identifier that the access network device supports for access of a terminal device includes a first public land mobile network identifier used for access of a terminal device of the second operator, and at least one public land mobile network identifier that a first access and mobility management function of the first operator supports for access of a terminal device includes the first public land mobile network identifier.

In a possible implementation, the apparatus 1000 further includes a receiving module 1002. The receiving module 1002 is configured to receive a registration request message sent by the terminal device of the second operator, where the registration request message is used to request to access a network, the registration request message includes second information, and the second information indicates that the terminal device of the second operator selects the first public land mobile network identifier. Correspondingly, the sending module 1001 is further configured to send the registration request message to the first access and mobility management function.

In a possible implementation, the receiving module 1002 is further configured to receive third information sent by the first access and mobility management function, where the third information indicates the at least one public land mobile network identifier that the first access and mobility management function supports for access of a terminal device.

In a possible implementation, the first public land mobile network identifier is a public land mobile network identifier of the second operator.

In a possible implementation, the first public land mobile network identifier is a public land mobile network identifier that is allocated by the first operator and that is used for access of the terminal device of the second operator.

In a possible implementation, the second operator is any one of N operators, the N operators do not include the first operator, and N is a positive integer.

In a possible implementation, the at least one public land mobile network identifier that the access network device supports for access of a terminal device further includes a second public land mobile network identifier used for access of a terminal device of a third operator, and at least one public land mobile network identifier that a second access and mobility management function of the first operator supports for access of a terminal device includes the second public land mobile network identifier, where the third operator and the first operator share the access network device, and the access network device interacts with a core network device of the third operator through the core network device of the first operator.

In a second embodiment, the apparatus 1000 may be used in a first access and mobility management function. The first access and mobility management function belongs to a first operator.

Specifically, the sending module 1001 is configured to send third information to an access network device, where the third information indicates at least one public land mobile network identifier that the first access and mobility management function supports for access of a terminal device, the access network device is a shared access network device of the first operator and a second operator, and the access network device needs to interact with a core network device of the second operator through a core network device of the first operator, where at least one public land mobile network identifier that the access network device supports for access of a terminal device includes a first public land mobile network identifier used for access of a terminal device of the second operator, and the at least one public land mobile network identifier that the first access and mobility management function supports for access of a terminal device includes the first public land mobile network identifier.

In a possible implementation, the first public land mobile network identifier is a public land mobile network identifier of the second operator.

In a possible implementation, the first public land mobile network identifier is a public land mobile network identifier that is allocated by the first operator and that is used for access of the terminal device of the second operator.

In a possible implementation, the sending module 1001 is further configured to send a first correspondence between the first public land mobile network identifier and a service provider name corresponding to the terminal device of the second operator to the terminal device of the second operator.

In a possible implementation, the second operator is any one of N operators, the N operators do not include the first operator, and N is a positive integer.

In a possible implementation, a second correspondence between the first public land mobile network identifier, at least one public land mobile network identifier included in the second operator, and the service provider name corresponding to the terminal device of the second operator is configured in a unified data management function of the second operator.

The sending module 1001 is further configured to send fourth information to the unified data management function, where the fourth information is used to request the first correspondence, the fourth information includes a home public land mobile network identifier of the terminal device of the second operator, and the home public land mobile network identifier is included in the at least one public land mobile network identifier included in the second operator. The receiving module 1002 is further configured to receive the first correspondence sent by the unified data management function.

In a possible implementation, a third correspondence between the first public land mobile network identifier, an identifier of the terminal device of the second operator, and the service provider name corresponding to the terminal device of the second operator is configured in a unified data management function of the second operator. The sending module 1001 is further configured to send fifth information to the unified data management function, where the fifth information is used to request the first correspondence, and the fifth information includes the identifier of the terminal device of the second operator. The receiving module 1002 is further configured to receive the first correspondence sent by the unified data management function.

In a possible implementation, a fourth correspondence between the first public land mobile network identifier, at least one home public land mobile network identifier included in the second operator, and the service provider name corresponding to the terminal device of the second operator is configured in the first access and mobility management function. The apparatus 1000 further includes a processing module 1003. The processing module 1003 is further configured to obtain the first correspondence based on a home public land mobile network identifier of the terminal device of the second operator and the fourth correspondence, where the home public land mobile network identifier of the terminal device of the second operator is included in the at least one home public land mobile network identifier included in the second operator.

In a possible implementation, a fifth correspondence between the first public land mobile network identifier, an identifier of the terminal device of the second operator, and the service provider name corresponding to the terminal device of the second operator is configured in the first access and mobility management function. The processing module 1003 is further configured to obtain the first correspondence based on the identifier of the terminal device of the second operator and the fifth correspondence.

In a possible implementation, the at least one public land mobile network identifier that the access network device supports for access of a terminal device further includes a second public land mobile network identifier used for access of a terminal device of a third operator, and at least one public land mobile network identifier that a second access and mobility management function of the first operator supports for access of a terminal device further includes the second public land mobile network identifier.

In a possible implementation, the first correspondence is configured in a unified data management function of the second operator. The sending module 1001 is further configured to send sixth information to the unified data management function, where the sixth information is used to request the first correspondence, and the sixth information includes the first public land mobile network identifier. The receiving module 1002 is further configured to receive the first correspondence sent by the unified data management function.

In a possible implementation, the first correspondence is configured in the first access and mobility management function. The processing module 1003 is further configured to: when the terminal device of the second operator selects the first public land mobile network identifier, send the first correspondence between the first public land mobile network identifier and the service provider name corresponding to the terminal device of the second operator to the terminal device of the second operator.

In a third embodiment, the communication apparatus may be used in a terminal device, and the terminal device belongs to a second operator. Specifically, the receiving module 1002 is configured to receive a first correspondence that is between a first public land mobile network identifier and a service provider name corresponding to the terminal device of the second operator and that is sent by a first access and mobility management function of a first operator, where the first operator and the second operator share an access network device, and the access network device interacts with a core network device of the second operator through a core network device of the first operator. The processing module 1003 is configured to: when the terminal device selects the first public land mobile network identifier, display the service provider name corresponding to the terminal device of the second operator based on the first correspondence, where at least one public land mobile network identifier that the access network device supports for access of a terminal device includes the first public land mobile network identifier used for access of the terminal device of the second operator, and at least one public land mobile network identifier that the first access and mobility management function of the first operator supports for access of a terminal device includes the first public land mobile network identifier.

In a possible implementation, the first public land mobile network identifier is a public land mobile network identifier that is allocated by the first operator and that is used for access of the terminal device of the second operator.

FIG. 11 is a diagram of a structure of a communication apparatus according to another embodiment of this application. The apparatus shown in FIG. 11 may be configured to perform the method according to any one of the foregoing embodiments.

As shown in FIG. 11, the apparatus 1100 in this embodiment includes a memory 1101 and a processor 1102. Optionally, the apparatus 1100 further includes a communication interface 1103 and a bus 1104. The memory 1101, the processor 1102, and the communication interface 1103 are communicatively connected to each other through the bus 1104.

The memory 1101 may be a read only memory (read only memory, ROM), a static storage device, a dynamic storage device, or a random access memory (random access memory, RAM). The memory 1101 may store a program. When the program stored in the memory 1101 is executed by the processor 1102, the processor 1102 is configured to perform the steps of the methods shown in FIG. 5 to FIG. 9A and FIG. 9B.

The processor 1102 may be a general-purpose central processing unit (central processing unit, CPU), a microprocessor, an application specific integrated circuit (application specific integrated circuit, ASIC), or one or more integrated circuits, and is configured to execute a related program, to implement the methods shown in FIG. 3 to FIG. 9A and FIG. 9B in this application.

The processor 1102 may alternatively be an integrated circuit chip and has a signal processing capability. In an implementation process, the steps of the methods in FIG. 5 to FIG. 9A and FIG. 9B in embodiments of this application may be completed by using an integrated logic circuit of hardware in the processor 1102 or instructions in a form of software.

The processor 1102 may alternatively be a general-purpose processor, a digital signal processor (digital signal processing, DSP), an application specific integrated circuit (ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

Steps of the methods disclosed with reference to embodiments of this application may be directly executed and accomplished through a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 1101. The processor 1102 reads information in the memory 1101, and completes, in combination with hardware of the processor, functions that need to be performed by units included in the apparatus in this application. For example, steps/functions in embodiments shown in FIG. 3 to FIG. 9A and FIG. 9B.

The communication interface 1103 may use, but is not limited to, a transceiver apparatus such as a transceiver, to implement communication between the apparatus 1100 and another device or a communication network.

The bus 1104 may include a path for transmitting information between various components (for example, the memory 1101, the processor 1102, and the communication interface 1103) of the apparatus 1100.

It should be understood that the apparatus 1100 shown in this embodiment of this application may be an electronic device, or may be a chip configured in the electronic device. The apparatus 1100 may be deployed in a terminal device, or may be deployed in a network device.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to an access network device, wherein the access network device is a shared access network device of a first operator and a second operator, the access network device needs to interact with a core network of the second operator through a core network of the first operator that connectes to the access network device, and the method comprises:
broadcasting, by the access network device, first information, wherein the first information indicates at least one public land mobile network identifier that the access network device supports for access of a terminal device, wherein
the at least one public land mobile network identifier that the access network device supports for access of a terminal device comprises a first public land mobile network identifier corresponding to the second operator and a third public land mobile network identifier corresponding to the first operator; and
at least one public land mobile network identifier supported by a first access and mobility management function of the first operator comprises the first public land mobile network identifier and the third public land mobile network identifier.

2. The method according to claim 1, wherein the method further comprises:
receiving a registration request message sent by a terminal device of the second operator, wherein the registration request message is used to request to access a network, the registration request message comprises second information, and the second information indicates that the terminal device of the second operator selects the first public land mobile network identifier; and
sending the registration request message to the first access and mobility management function.

3. The method according to claim 1 or 2, wherein the method further comprises:
receiving third information sent by the first access and mobility management function, wherein the third information indicates the at least one public land mobile network identifier that the first access and mobility management function supports for access of a terminal device.

4. The method according to any one of claims 1 to 3, wherein the first public land mobile network identifier is a public land mobile network identifier of the second operator.

5. The method according to any one of claims 1 to 3, wherein the first public land mobile network identifier is a public land mobile network identifier that is allocated by the first operator and that is used for access of the terminal device of the second operator.

6. The method according to claim 5, wherein the second operator is any one of N operators, the N operators do not comprise the first operator, and N is a positive integer.

7. The method according to claim 5, wherein the at least one public land mobile network identifier that the access network device supports for access of a terminal device further comprises a second public land mobile network identifier used for access of a terminal device of a third operator, at least one public land mobile network identifier that a second access and mobility management function of the first operator supports for access of a terminal device comprises the second public land mobile network identifier, the third operator and the first operator share the access network device, and the access network device interacts with a core network of the third operator through the core network of the first operator that connects to the access network device.

8. A communication method, applied to a first access and mobility management function, wherein the first access and mobility management function belongs to a first operator, and the method comprises:
sending third information to an access network device, wherein the third information indicates at least one public land mobile network identifier that the first access and mobility management function supports for access of a terminal device, the access network device is a shared access network device of the first operator and a second operator, and the access network device needs to interact with a core network of the second operator through a core network of the first operator that connects to the access network device, wherein
at least one public land mobile network identifier that the access network device supports for access of a terminal device comprises a first public land mobile network identifier corresponding to the second operator and a third public land mobile network identifier corresponding to the first operator; and
the at least one public land mobile network identifier supported by the first access and mobility management function comprises the first public land mobile network identifier and the third public land mobile network identifier.

9. The method according to claim 8, wherein the first public land mobile network identifier is a public land mobile network identifier of the second operator.

10. The method according to claim 8, wherein the first public land mobile network identifier is a public land mobile network identifier that is allocated by the first operator and that is used for access of a terminal device of the second operator.

11. The method according to claim 10, wherein the method further comprises:
sending a first correspondence between the first public land mobile network identifier and a service provider name corresponding to the terminal device of the second operator to the terminal device of the second operator.

12. The method according to claim 11, wherein the second operator is any one of N operators, the N operators do not comprise the first operator, and N is a positive integer.

13. The method according to claim 12, wherein a second correspondence between the first public land mobile network identifier, at least one public land mobile network identifier comprised in the second operator, and the service provider name corresponding to the terminal device of the second operator is configured in a unified data management function of the second operator; and
before sending the first correspondence between the first public land mobile network identifier and the service provider name corresponding to the terminal device of the second operator to the terminal device of the second operator, the method further comprises:
sending fourth information to the unified data management function, wherein the fourth information is used to request the first correspondence, the fourth information comprises a home public land mobile network identifier of the terminal device of the second operator, and the home public land mobile network identifier is comprised in the at least one public land mobile network identifier comprised in the second operator; and
receiving the first correspondence sent by the unified data management function.

14. The method according to claim 12, wherein a third correspondence between the first public land mobile network identifier, an identifier of the terminal device of the second operator, and the service provider name corresponding to the terminal device of the second operator is configured in a unified data management function of the second operator; and
before sending the first correspondence between the first public land mobile network identifier and the service provider name corresponding to the terminal device of the second operator to the terminal device of the second operator, the method further comprises:
sending fifth information to the unified data management function, wherein the fifth information is used to request the first correspondence, and the fifth information comprises the identifier of the terminal device of the second operator; and
receiving the first correspondence sent by the unified data management function.

15. The method according to claim 12, wherein a fourth correspondence between the first public land mobile network identifier, at least one home public land mobile network identifier comprised in the second operator, and the service provider name corresponding to the terminal device of the second operator is configured in the first access and mobility management function; and
before sending the first correspondence between the first public land mobile network identifier and the service provider name corresponding to the terminal device of the second operator to the terminal device of the second operator, the method further comprises:
obtaining the first correspondence based on a home public land mobile network identifier of the terminal device of the second operator and the fourth correspondence, wherein the home public land mobile network identifier of the terminal device of the second operator is comprised in the at least one home public land mobile network identifier comprised in the second operator.

16. The method according to claim 12, wherein a fifth correspondence between the first public land mobile network identifier, an identifier of the terminal device of the second operator, and the service provider name corresponding to the terminal device of the second operator is configured in the first access and mobility management function; and
before sending the first correspondence between the first public land mobile network identifier and the service provider name corresponding to the terminal device of the second operator to the terminal device of the second operator, the method further comprises:
obtaining the first correspondence based on the identifier of the terminal device of the second operator and the fifth correspondence.

17. The method according to claim 11, wherein the at least one public land mobile network identifier that the access network device supports for access of a terminal device further comprises a second public land mobile network identifier used for access of a terminal device of a third operator, and at least one public land mobile network identifier that a second access and mobility management function of the first operator supports for access of a terminal device comprises the second public land mobile network identifier.

18. The method according to claim 17, wherein the first correspondence is configured in a unified data management function of the second operator; and
before sending the first correspondence between the first public land mobile network identifier and the service provider name corresponding to the terminal device of the second operator to the terminal device of the second operator, the method further comprises:
sending sixth information to the unified data management function, wherein the sixth information is used to request the first correspondence, and the sixth information comprises the first public land mobile network identifier; and
receiving the first correspondence sent by the unified data management function.

19. The method according to claim 17, wherein the first correspondence is configured in the first access and mobility management function; and
sending the first correspondence between the first public land mobile network identifier and the service provider name corresponding to the terminal device of the second operator to the terminal device of the second operator comprises:
when the terminal device of the second operator selects the first public land mobile network identifier, sending the first correspondence between the first public land mobile network identifier and the service provider name corresponding to the terminal device of the second operator to the terminal device of the second operator.

20. A communication method, applied to a terminal device, wherein the terminal device belongs to a second operator, and the method comprises:
receiving first information broadcast by an access network device, wherein the first information indicates at least one public land mobile network identifier that the access network device supports for access of a terminal device, the access network device is a shared access network device of a first operator and the second operator, and the access network device needs to interact with a core network of the second operator through a core network of the first operator that connects to the access network device, wherein the at least one public land mobile network identifier that the access network device supports for access of a terminal device comprises a first public land mobile network identifier corresponding to the second operator and a third public land mobile network identifier corresponding to the first operator; and
selecting, by the terminal device, the first public land mobile network identifier for access.

21. The communication method according to claim 20, wherein the method further comprises:
receiving a first correspondence that is between the first public land mobile network identifier and a service provider name corresponding to the terminal device of the second operator and that is sent by a first access and mobility management function of the first operator; and
when the terminal device selects the first public land mobile network identifier, displaying the service provider name corresponding to the terminal device of the second operator based on the first correspondence.

22. The method according to claim 20 or 21, wherein the first public land mobile network identifier is a public land mobile network identifier that is allocated by the first operator and that is used for access of the terminal device of the second operator.

23. A communication apparatus, comprising a processor, wherein the processor is coupled to a memory;
the memory is configured to store program instructions; and
the processor is configured to invoke the program instructions in the memory, to perform the method according to any one of claims 1 to 7 or claims 8 to 19 or claims 20 to 22.

24. A computer-readable medium, wherein the computer-readable medium stores program code to be executed by a computer, and the program code comprises instructions used to perform the method according to any one of claims 1 to 7 or claims 8 to 19 or claims 20 to 22.

25. A computer program product, wherein the computer program product comprises computer program code, and when the computer program code is run on a computer, the computer is enabled to implement the method according to any one of claims 1 to 7 or claims 8 to 19 or claims 20 to 22.
